(19) Europäisches Patentamt / European Patent Office / Office européen des brevets

(11) **EP 4 258 786 B1**

(12) **EUROPEAN PATENT SPECIFICATION**

(45) Date of publication and mention
of the grant of the patent:
**25.02.2026 Bulletin 2026/09**

(21) Application number: **21900061.9**

(22) Date of filing: **02.12.2021**

(51) International Patent Classification (IPC):
***H04W 72/12*** *(2023.01)*    *H04L 5/00* *(2006.01)*
***H04W 72/1268*** *(2023.01)*

(52) Cooperative Patent Classification (CPC):
**H04W 72/1268; H04L 5/0044; H04L 5/0051;**
**H04L 5/0094; H04W 72/23**

(86) International application number:
**PCT/CN2021/135074**

(87) International publication number:
**WO 2022/117035 (09.06.2022 Gazette 2022/23)**

(54) **PUSCH SCHEDULING TRANSMISSION METHODS, TERMINAL AND NETWORK SIDE DEVICE**

PUSCH-PLANUNGSÜBERTRAGUNGSVERFAHREN, ENDGERÄT UND NETZWERKSEITIGE VORRICHTUNG

PROCÉDÉS DE TRANSMISSION DE PROGRAMMATION DE CANAL PUSCH, TERMINAL ET DISPOSITIF DU CÔTÉ RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 02.12.2020 CN 202011391237
24.05.2021 CN 202110567553

(43) Date of publication of application:
**11.10.2023 Bulletin 2023/41**

(73) Proprietor: **Vivo Mobile Communication Co., Ltd.**
**Dongguan, Guangdong 523863 (CN)**

(72) Inventors:
• **SHI, Yuan**
**Dongguan, Guangdong 523863 (CN)**
• **SONG, Yang**
**Dongguan, Guangdong 523863 (CN)**
• **LIU, Hao**
**Dongguan, Guangdong 523863 (CN)**

(74) Representative: **Lavoix**
**Bayerstraße 83**
**80335 München (DE)**

(56) References cited:
EP-A1- 3 681 055    WO-A1-2019/111619
CN-A- 110 944 348    CN-A- 111 726 213
CN-A- 111 901 021    CN-A- 111 901 021
US-A1- 2020 389 885    US-A1- 2023 110 740

• **QUALCOMM INCORPORATED: "Enhancements on Multi-TRP for PDCCH, PUCCH and PUSCH",** vol. RAN WG1, no. e-Meeting; 20201026 - 20201113, 1 November 2020 (2020-11-01), XP052351171, Retrieved from the Internet <URL:https://ftp.3gpp.org/tsg_ran/WG1_RL1/TSGR1_103-e/Docs/R1-2009251.zip R1-2009251 Enhancements on Multi-TRP for PDCCH, PUCCH and PUSCH.docx> [retrieved on 20201101]
• **CONVIDA WIRELESS: "Multi-TRP Enhancements for PDCCH, PUCCH and PUSCH",** vol. RAN WG1, no. e-Meeting; 20201026 - 20201113, 1 November 2020 (2020-11-01), XP052351086, Retrieved from the Internet <URL:https://ftp.3gpp.org/tsg_ran/WG1_RL1/TSGR1_103-e/Docs/R1-2009159.zip R1-2009159.docx> [retrieved on 20201101]

Description

## TECHNICAL FIELD

This application pertains to the field of communications technologies, and specifically relates to physical uplink shared channel (Physical Uplink Shared Channel, PUSCH) transmission scheduling methods, a terminal, and a network side device.

## BACKGROUND

In a mobile communications system, an uplink PUSCH only supports sending of a single transmission reception point (Transmission Reception Point, TRP), and a network side device may schedule transmission of the PUSCH by using downlink control information (Downlink Control Information, DCI). With development of technologies, a multi-TRP scenario needs to be supported. In the multi-TRP scenario, how to implement transmission of a PUSCH will become necessary, for example, whether the PUSCH is sent to one TRP or to a plurality of TRP, but no effective solution is provided in the related art.
WO 2019111619A1 discloses a terminal apparatus, a base station apparatus, and a communication method.

## SUMMARY

Embodiments of this application provide PUSCH transmission scheduling methods, a terminal, and a network side device, as defined in the appended set of claims, to resolve a problem that transmission of a PUSCH cannot be implemented in a multi-TRP scenario.
In the embodiments of this application, at least one SRS resource set and/or SRS resource associated with a PUSCH may be determined according to scheduling signaling of the PUSCH, and each SRS resource set or SRS resource may correspond to one TRP. In the embodiments of this application, transmission of a PUSCH can be implemented in a multi-TRP scenario, so that a terminal can send the PUSCH to a TRP corresponding to an SRS resource set and/or SRS resource, thereby improving transmission efficiency of the PUSCH.

## BRIEF DESCRIPTION OF DRAWINGS

FIG. 1 is a schematic diagram of a wireless communications system according to embodiments of this application;
FIG. 2 is a schematic flowchart of a PUSCH transmission scheduling method according to an embodiment of this application;
FIG. 3 is a schematic flowchart of a PUSCH transmission scheduling method according to another embodiment of this application;
FIG. 4 is a schematic structural diagram of a terminal according to an illustrative embodiment of this application not in accordance with the appended claims;
FIG. 5 is a schematic structural diagram of a network side device according to another illustrative embodiment of this application not in accordance with the appended claims;
FIG. 6 is a schematic structural diagram of a communications device according to an embodiment of this application;
FIG. 7 is a schematic structural diagram of a terminal according to an embodiment of this application; and
FIG. 8 is a schematic structural diagram of a network side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application as defined by the appended claims.
In the specification and claims of this application, the terms "first", "second", and the like are intended to distinguish between similar objects but do not describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system.

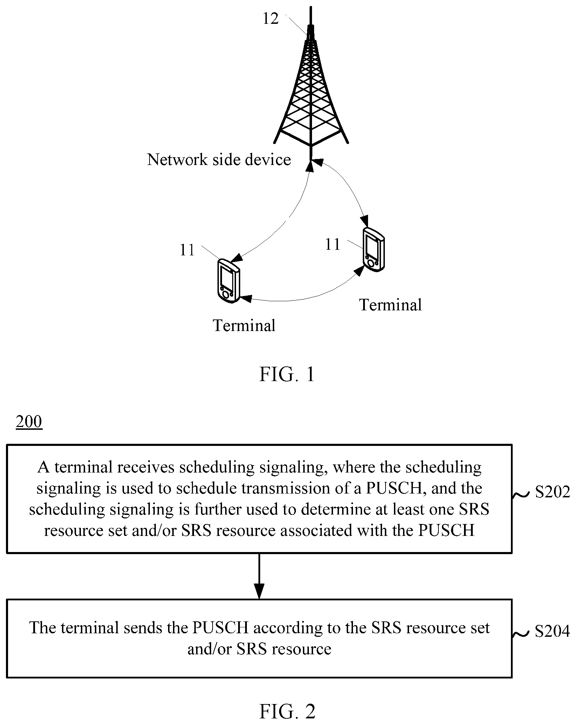

FIG. 1 is a schematic diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next generation NodeB (gNB), a home NodeB, a home evolved NodeB, a WLAN access point, a Wi-Fi node, a transmission reception point (Transmission Reception Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a physical uplink shared channel (Physical Uplink Shared Channel, PUSCH) scheduling method, a terminal, and a network side device provided in the embodiments of this application are described in detail below by using specific embodiments and application scenarios thereof.

As shown in FIG. 2, an embodiment of this application provides a PUSCH transmission scheduling method 200. The method may be performed by a terminal. In other words, the method may be performed by software or hardware installed in the terminal. The method includes the following steps.

S202: A terminal receives scheduling signaling, where the scheduling signaling is used to schedule transmission of a PUSCH, and the scheduling signaling is further used to determine at least one SRS resource set and/or SRS resource associated with the PUSCH.

The scheduling signaling mentioned in the embodiments of this specification may be radio resource control (Radio Resource Control, RRC) signaling or downlink control information (Downlink Control Information, DCI) signaling.

The scheduling signaling may be used to determine (for example, explicitly and implicitly indicate) the at least one SRS resource associated with the PUSCH; or the scheduling signaling may be used to determine the at least one SRS resource set associated with the PUSCH. Generally, an SRS resource set includes (or is associated with) one or more SRS resources. Therefore, in a case that the scheduling signaling determines the at least one SRS resource set associated with the PUSCH, an SRS resource in the at least one SRS resource set is also determined.

Optionally, in this embodiment of this application, the at least one SRS resource set and/or SRS resource associated with the PUSCH may be directly indicated (or explicitly indicated) in combination with an implicit indication. The direction indication manner in this example may be independent coding or at least partial joint coding.

Optionally, in this embodiment of this application, the at least one SRS resource set and/or SRS resource associated with the PUSCH may be directly indicated. In this example, independent coding or at least partial joint coding may be adopted.

S204: The terminal sends the PUSCH according to the SRS resource set and/or SRS resource.

The SRS resource set and/or SRS resource mentioned in this step may be consistent with the SRS resource set and/or SRS resource determined in S202. For example, the SRS resource set is determined in S202, and the PUSCH is sent according to the determined SRS resource set in this step; or the SRS resource is determined in S202, and the PUSCH is sent according to the determined SRS resource in this step.

In this step, the PUSCH is sent according to the SRS resource set and/or SRS resource, for example, the PUSCH is sent by using a same port number, same beam information, and the like as the SRS resource set and/or SRS resource.

Optionally, for the at least one SRS resource set associated with the PUSCH, each SRS resource set may correspond to one transmission reception point (Transmission Reception Point, TRP). In this way, the terminal may send the PUSCH to a TRP (respectively) corresponding to the at least one SRS resource set, and transmission of the PUSCH can be implemented in a multi-TRP scenario.

Optionally, for the at least one SRS resource associated with the PUSCH, each SRS resource may correspond to one TRP. In this way, the terminal may send the PUSCH to a TRP (respectively) corresponding to the at least one SRS resource, and transmission of the PUSCH can be implemented in a multi-TRP scenario.

According to the PUSCH transmission scheduling method provided in this embodiment of this application, at least one SRS resource set and/or SRS resource associated with a PUSCH may be determined according to scheduling signaling of the PUSCH, and each SRS resource set or SRS resource may correspond to one TRP. In this embodiment of this application, transmission of a PUSCH can be implemented in a multi-TRP scenario, so that a terminal can send the PUSCH to a TRP corresponding to an SRS resource set and/or SRS resource, thereby improving transmission efficiency of the PUSCH.

Optionally, a method for associating the PUSCH with the SRS resource set and/or SRS resource is implicit, that is, an association relationship between the PUSCH and the SRS resource set and/or SRS resource is implicitly indicated. In an example, a number of the SRS resource set and/or SRS resource associated with the PUSCH is minimum or maximum, and the minimum or maximum mentioned herein may be for all SRS resource sets and/or SRS resources configured by the terminal. In another example, beam information of a receive beam of the scheduling signaling or beam information of a transmit beam of the PUSCH is the same as at least one of the following: a path loss reference signal (Path Loss RS, PL RS) associated with the SRS resource set and/or SRS resource set and/or beam information associated with the SRS resource set and/or SRS resource set. The "same" beam information mentioned herein may be approximately the same or close to the beam information, that is, a specified error range is allowed. It should be noted that the foregoing two examples are separately implemented, or may be implemented at the same time.

Optionally, the scheduling signaling includes an indicator field, and the indicator field is used to indicate (explicitly indicate) the SRS resource set and/or SRS resource. In this example, the SRS resource set and/or SRS resource may be directly indicated. For example, an SRS resource indicator (SRS Resource Indicator, SRI) field in the scheduling signaling directly indicates a first SRS resource or a second SRS resource, or indicates both a first SRS resource and a second SRS resource.

In some embodiments of this application, before S202, the method further includes: receiving, by the terminal, an SRS configuration, where the SRS configuration includes at least one SRS resource set, and each SRS resource set includes at least one SRS resource, where a quantity of SRS resources included in a target SRS resource set is greater than or equal to a quantity of SRS resources included in another SRS resource set in the at least one SRS resource set, and the target SRS resource set is an SRS resource set with a minimum identifier in the at least one SRS resource set.

Optionally, the scheduling signaling includes at least two independent coding fields, the at least two independent coding fields are respectively used to indicate SRS resources in at least two SRS resource sets, and an order of the at least two independent coding fields may be predefined.

For example, the terminal receives the SRS configuration sent by a network side device, where the SRS configuration includes two SRS resource sets used for codebook or non-codebook transmission, values of SRS resource set identifiers (or referred to as SRS resource set indexes) are 1 and 2 (or the indexes are 0 and 1 if being numbered from 0), an SRS resource set whose value is 1 is a first SRS resource set, and an SRS resource set whose value is 2 is a second SRS resource set. The first SRS resource set includes four SRS resources, and the second SRS resource set includes two SRS resources. Therefore, in the two independent coding fields (for example, SRS resource indicator fields SRI fields) in the scheduling signaling for scheduling transmission of the PUSCH, 2 bits of a first SRI field and 1 bit of a second SRI field are respectively used to indicate associated SRS resources for transmission of the PUSCH. Optionally, the scheduling signaling further includes a dynamic handover indicator field, and a size of the dynamic handover indicator field is 2 bits. A specific meaning is shown in Table 1.

**Table 1**

| Value | SRI field and TPMI field | Description |
|---|---|---|
| 00 | 1st SRI/TPMI field: 1st SRS resource set (2nd field is unused) | Single TRP mode with TRP1 (s-TRP mode with TRP1) |
| 01 | 1st SRI/TPMI field: 2nd SRS resource set (2nd field is unused) | Single TRP mode with TRP2 (s-TRP mode with TRP2) |
| 10 | 1st SRI/TPMI field: 1st SRS resource set<br>2nd SRI/TPMI field: 2nd SRS resource set | Multi-TRP mode with TRP1, TRP2 order (m-TRP mode with TRP1, TRP2 order) |

(continued)

| Value | SRI field and TPMI field | Description |
|---|---|---|
| 11 | 2nd SRI/TPMI field: 2nd SRS resource set<br>1st SRI/TPMI field: 1st SRS resource set | Multi-TRP mode with TRP2, TRP1 order (m-TRP mode with TRP2, TRP1 order) |

In the table:

00: The first SRI field in the DCI indicates an SRS resource in the first SRS resource set, and all repeat transmission occasions of the PUSCH are associated with only the SRS resource.

01: The first SRI field in the DCI indicates an SRS resource in the second SRS resource set, and all repeat transmission occasions of the PUSCH are associated with only the SRS resource.

10: The first SRI field in the DCI indicates an SRS resource in the first SRS resource set, and the second SRI field indicates an SRS resource in the second SRS resource set, which are repeatedly associated with the PUSCH in an order of the first SRS resource set first and then the second SRS resource set.

11: The second SRI field in the DCI indicates an SRS resource in the second SRS resource set, and the first SRI field indicates an SRS resource in the first SRS resource set, which are repeatedly associated with the PUSCH in an order of the second SRS resource set first and then the first SRS resource set.

Alternatively, meanings of 10 and 11 in the foregoing Table 1 may be interchanged, for example:

00: The first SRI field in the DCI indicates an SRS resource in the first SRS resource set, and all repeat transmission occasions of the PUSCH are associated with only the SRS resource.
01: The second SRI field in the DCI indicates an SRS resource in the second SRS resource set, and all repeat transmission occasions of the PUSCH are associated with only the SRS resource.
10: The first SRI field in the DCI indicates an SRS resource in the first SRS resource set, and the second SRI field indicates an SRS resource in the second SRS resource set, which are repeatedly associated with the PUSCH in an order of the second SRS resource set first and then the first SRS resource set.
11: The second SRI field in the DCI indicates an SRS resource in the second SRS resource set, and the first SRI field indicates an SRS resource in the first SRS resource set, which are repeatedly associated with the PUSCH in an order of the first SRS resource set first and then the second SRS resource set.

In this example, it is assumed that the PUSCH is associated with two SRS resource sets (an SRS resource set may be referred to as a set for short below), that is, two independent coding fields exist. For SRS resource level independent coding, an order indicated by the foregoing two independent coding fields may be a default order agreed upon in a protocol. For example, a first independent coding field corresponds to a first SRS resource set (a first set for short), and a second independent coding field corresponds to a second SRS resource set (a second set for short); or according to an indicated order of sets, when the indicated order of the sets is a second set and a first set, a first independent coding field corresponds to the second set, and the second independent coding field corresponds to the first set.
The PUSCH includes at least one transmission unit, and the transmission unit includes one of the following: one nominal (nominal) PUSCH repeat transmission, one actual (actual) PUSCH repeat transmission, one PUSCH transmission within a time domain unit (for example, a slot), one PUSCH frequency hopping transmission, or one PUSCH transmission in a plurality of PUSCH repeat transmissions.
In an example, the scheduling signaling indicates one SRS resource set, and the transmission unit is associated with the one SRS resource set. For example, if an SRI field of the scheduling signaling indicates one set, the PUSCH transmission unit is associated with the set.
The scheduling signaling indicates a plurality of SRS resource sets, the scheduling signaling is further used to indicate an order of the plurality of SRS resource sets, and the transmission unit is associated with the order of the plurality of SRS resource sets that is indicated by the scheduling signaling.
For example, if the SRI field of the scheduling signaling indicates a plurality of sets at the same time, and the SRI field may be used to indicate an order of the sets, the PUSCH transmission unit is associated with the order of the sets that is indicated by the SRI. Specifically, for example, the scheduled PUSCH includes a first PUSCH transmission unit and a second PUSCH transmission unit, and the sets indicated by the SRI include a first set and a second set. In this case, the first PUSCH transmission unit may correspond to the first set, and for example, the first PUSCH transmission unit is sent to a TRP corresponding to the first set. The second PUSCH transmission unit corresponds to the second set, and for example, the second PUSCH transmission unit is sent to a TRP corresponding to the second set.

In an example, the scheduling signaling indicates a plurality of SRS resource sets, the scheduling signaling does not indicate an order of the plurality of SRS resource sets, and the transmission unit is associated with one of the following: a configuration order of the plurality of SRS resource sets, for example, an order of configuration times; an identifier order of the plurality of SRS resource sets (an order of identifier sizes, which is similar below); an identifier order of SRS resources in the plurality of SRS resource sets; or a parity order of time domain units in which the transmission unit is located, where there is a parity binding relationship between the plurality of SRS resource sets and the time domain units in which the transmission unit is located.

In this example, if the SRI field of scheduling signaling indicates a plurality of sets at the same time, but the SRI field is not used to indicate an order of the plurality of sets, the PUSCH transmission unit is associated with the following method in an order of configured SRS resource sets: an order of set configurations or an order of set ID; a size order of SRS resource IDs in the SRS resource sets; or parity binding between the set and a slot in which the PUSCH transmission unit is located, where the parity binding may be performed by using a default rule, for example, the first set corresponds to a slot with an odd number and the second set corresponds to a slot with an even number, and vice versa.

Optionally, a codepoint (codepoint) in the scheduling signaling is used to indicate the at least one SRS resource set and/or SRS resource, and a correspondence between the codepoint and the SRS resource set and/or SRS resource meets one of the following:

(1) Being predefined. For example, a protocol agreement includes a predefined correspondence between the codepoint and the set and/or resource, and a special processing manner corresponding to an invalid codepoint.
(2). Being configured by a network side device. For example, when a quantity of resources configured in one set is less than a maximum quantity of supported codepoints, the network side device supports configuration of the foregoing correspondence.
(3) Being updated and indicated by a network side device. For example, when a quantity of resources configured in one set is less than a maximum quantity of supported codepoints, the network side device supports updating of the foregoing correspondence.

It should be noted that the invalid codepoint mentioned in the embodiments of this specification includes, for example, that a set and/or a resource indicated by the (invalid) codepoint are/is not configured; the terminal cannot determine the set and/or the resource corresponding to the (invalid) codepoint. For example, a relationship between the codepoint and the set and/or the resource is not configured, indicated, or defined.

The foregoing embodiment further includes the following step: determining a processing manner corresponding to an invalid codepoint, where the processing manner corresponding to the invalid codepoint includes at least one of the following:

(1) if only one SRS resource is configured in an SRS resource set corresponding to a target codepoint, an SRS resource corresponding to the target codepoint is the one SRS resource;
(2) if a target codepoint is an invalid codepoint, an SRS resource set and/or SRS resource corresponding to a codepoint before or after the target codepoint is used as an SRS resource set and/or SRS resource corresponding to the invalid codepoint;
(3) if a target codepoint is an invalid codepoint, an SRS resource set and/or SRS resource before or after an SRS resource set and/or SRS resource corresponding to the target codepoint is used as an SRS resource set and/or SRS resource corresponding to the invalid codepoint;
(4) the terminal does not expect that an SRS resource set corresponding to a codepoint is an SRS resource set that is not configured; or
(5) the terminal does not expect that an SRS resource corresponding to a codepoint is an SRS resource that is not configured.

Optionally, the PUSCH is associated with a first SRS resource and a second SRS resource; and the first SRS resource and the second SRS resource are associated with different SRS resource sets. In this embodiment, the first resource and the second resource are associated with different SRS resource set IDs.

Optionally, the PUSCH is associated with a plurality of SRS resource sets; and any two SRS resource sets in the plurality of SRS resource sets meet at least one of the following: having different path loss RSs, having different spatial beam configurations, having different associated RSs, having a same time domain characteristic, being associated with a same SRS resource identifier ID, having a same quantity of SRS resource ports, having a same cycle, having different periodic slot offsets, being associated with different TRP indexes, being associated with different control resource set resource pool indexes, having different power control parameter indexes, or having different closed-loop power control index groups.

Optionally, the PUSCH is associated with a first SRS resource set and a second SRS resource set; and the first SRS resource set and the second SRS resource set meet at least one of the following:

(1) the first SRS resource set and the second SRS resource set are sorted in ascending order or descending order according to SRS resource set identifiers;
(2) the first SRS resource set and the second SRS resource set are sorted from front to back or from back to front according to a configuration order of SRS resource sets (for example, an order of configuration times);
(3) the first SRS resource set and the second SRS resource set are configured in different sequences; or
(4) the first SRS resource set and the second SRS resource set are configured with different power control parameter indexes, where the power control parameter indexes are used to distinguish the first SRS resource set from the second SRS resource set. Optionally, the power control parameter index may be configured in an SRS resource set.

Optionally, the PUSCH is associated with a first SRS resource and a second SRS resource; and the first SRS resource and the second SRS resource are sorted in ascending order or descending order according to SRS resource identifiers; and/or the first SRS resource and the second SRS resource are sorted from front to back or from back to front according to a configuration order of SRS resources.

In the foregoing two embodiments, the first SRS resource set and the second SRS resource set are associated with SRS resources having a same specific usage, or the first SRS resource and the second SRS resource are associated with SRS resources having a same specific usage, where the specific usage is: (1) predefined; (2) configured by a network side device; or (3) determined according to a transmission mode of the PUSCH. For example, if the PUSCH is configured with a codebook (codebook) transmission, the foregoing specific usage is a codebook; or if the PUSCH is configured with a non-codebook (non-codebook) transmission, the foregoing specific usage is a non-codebook.

Optionally, the PUSCH is associated with a plurality of SRS resource sets; and any two SRS resource sets in the plurality of SRS resource sets are associated with different SRS resources. For example, the PUSCH is associated with a first set and a second set, and the first set and the second set need to be associated with different SRS resource IDs.

Optionally, the terminal supports a full power mode 2 (full power mode 2); and the terminal does not expect that the PUSCH is associated with a plurality of SRS resource sets having a codebook usage. In this embodiment, in a case that the terminal supports the full power mode 2, the PUSCH does not support association with the plurality of SRS resource sets having the codebook usage. For example, the terminal does not support configuration of the plurality of SRS resource sets having the codebook usage.

The following briefly describes the full power mode 2. Because the network side device may configure a maximum of one SRS resource set for the terminal for CSI-based uplink transmission, each SRS resource set includes a maximum of two SRS resources, and the two SRS resources include a same quantity of ports, for example, one port, two ports, or four ports. However, quantities of ports supported in rel-16 in full power are different, and overhead indication is performed according to a larger quantity of ports. In a full power mode 1, ports are the same. However, in a full power mode 2, ports may be the same or different. The set supports a maximum of two different spatial information configurations, and a maximum of four resources are supported, where one resource is indicated by using a maximum of 2-bits SRI.

Optionally, an overhead size of at least one of the following field types in the scheduling signaling is related to the SRS resource set associated with the PUSCH: an SRS resource indicator (SRS Resource Indicator, SRI) field, a transmit power control (Transmit Power Control, TPC) field, a transmitted precoding matrix indicator (Transmitted Precoding Matrix Indicator, TPMI) field, a redundancy version (Redundancy version) field, an SRS request field (that is, an SRS request field), or a channel state information (Channel State Information, CSI) request field (that is, a CSI request). For example, the scheduling signaling is DCI or RRC, the PUSCH is associated with a first set and a second set, and an overhead size of the foregoing at least one field type in the DCI or the RRC is related to the configured first set and second set.

The at least one "field type" mentioned in this embodiment may be a type of a field. The field type includes a plurality of implementations. A filed is extended or an additional same field is added to indicate a plurality of sets and the like. For example, one original TPC field corresponds to 2 bits, the extension field still corresponds to one TPC field, but 4 bits are used. Adding an additional same field means that there is one original TPC field, and is now two independent fields: a TPC 1 and a TPC 2. The two fields may be coded independently.

In this embodiment, optionally, in a case that the at least one field type is configured with the second set, the field type in the DCI or the RRC needs to be correspondingly extended, and the field may be extended or a same field is added.

In this embodiment, optionally, in a case that the at least one field type is not configured with the second set, the field type in the DCI or the RRC also needs to be correspondingly extended according to a case that the second set is configured, but the terminal ignores deciphering of a field or a codepoint indicated by the second set. For example, the at least one SRS resource set includes a first SRS resource set but does not include a second SRS resource set, the at least one field type includes an indicator field or a codepoint related to the second SRS resource set, and the method further includes: ignoring, by the terminal, the indicator field or the codepoint.

Optionally, an overhead size and/or a deciphering manner of at least one of the following field types in the scheduling signaling are/is related to an indication of an SRI field in the scheduling signaling: a transmit power control TPC field, a transmitted precoding matrix indicator TPMI field, a redundancy version field, an SRS request field, or a channel state information CSI request field.

The at least one "field type" mentioned in this embodiment may be a type of a field. The field type includes a plurality of implementations. A filed is extended or an additional same field is added to indicate a plurality of sets and the like. For example, one original TPC field corresponds to 2 bits, the extension field still corresponds to one TPC field, but 4 bits are used. Adding an additional same field means that there is one original TPC field, and is now two independent fields: a TPC 1 and a TPC 2. The two fields may be coded independently.

Optionally, an overhead size of each TPMI field in at least one TPMI field is related to a quantity of SRS resource ports in the SRS resource set. A quantity of TPMI fields is equal to a quantity of SRS resource sets, that is, one TPMI field corresponds to one SRS resource set. A correspondence sequence between the TPMI field and the SRS resource set is not limited in this embodiment.

Further, an overhead size of a first TPMI field in the at least one TPMI field is determined by a maximum quantity of SRS resource ports in the at least one SRS resource set. For example, two SRS resources are configured in the first SRS resource set, and the two SRS resources are SRS resources of two ports. One four-port SRS resource and one two-port SRS resource are configured in the second SRS resource set. In this case, the DCI includes two TPMI fields, and a size of the first TPMI field is determined by four ports.

For example, one 4-port SRS resource and one 2-port SRS resource are configured in the second SRS resource set, which is a typical configuration in a full power mode 2 (full power mode 2).

Optionally, the foregoing embodiment further includes one of the following:

(1) For the at least one field type, in a case that the at least one SRS resource set is a plurality of SRS resource sets, the terminal deciphers each field type in the at least one field type. For example, for the at least one field type, in a case that the SRI field indicates being associated with a plurality of SRS sets, the field type in the DCI or the RRC needs to be deciphered simultaneously.

(2) For the at least one field type, in a case that the at least one SRS resource set is one SRS resource set, the terminal deciphers only one indicator field in field types associated with an SRS resource set indicated by the SRI field. For example, for the at least one field type, in a case that the SRI field indicates that the PUSCH is associated with one SRS set, only transmission of the PUSCH associated with the SRS set indicated by the SRI is deciphered in the field type in the DCI or the RRC.

For the fields mentioned in the foregoing embodiments, optionally, the method further includes: determining a deciphering order of the at least one field type according to one of the following:

(1) A predefined order. For example, a TPC 1 corresponds to a first set, and a TPC 2 corresponds to a second set.
(2) An order of the SRS resource sets indicated by the scheduling signaling. For example, if a number order indicated by the scheduling signaling is the second set first and then the first set, the TPC 1 corresponds to the second set, and the TPC 2 corresponds to the first set. For another example, if the scheduling signaling indicates the second set, according to the indicated order, the TPC 1 corresponds to the second set, and the TPC2 is not deciphered.

Optionally, the PUSCH is associated with a first SRS resource set and a second SRS resource set, and method further includes: receiving configuration information, where the configuration information is used to configure two power control parameter sequences, and the two power control parameter sequences are used to indicate power control parameters of PUSCH transmission units associated with the first SRS resource set and the second SRS resource set.

For example, the network side device configures the two power control parameter sequences for the terminal to indicate the power control parameters of the PUSCH transmission units associated with the first set and the second set, where the power control parameter includes at least one of the following: P0, alpha, a path loss RS ID, and a closed loop index (closed loop index), and the power control parameter sequence includes at least one of the following: Sri-PUSCH-MappingToAddModList, and sri-PUSCH-MappingToReleaseList.

In an example, the two power control parameter sequences include different closed-loop power control indexes. For example, the protocol specifies that a first power control parameter sequence includes only closed-loop indexes i0 and i1, and a second power control parameter sequence includes only closed-loop indexes i2 and i3.

In an example, the first SRS resource set and the second SRS resource set are separately associated with one of the power control parameter sequences. For example, the first set and the second set are separately associated with one power control parameter sequence, and the first resource and the second resource are separately associated with one closed-loop index in the power control parameter sequence. That is, when the foregoing SRI indication method determines a set and a resource that are associated with transmission of the PUSCH, the power control parameter is also determined.

Optionally, the foregoing embodiment further includes: determining, according to an SRI field of the scheduling signaling, a power control parameter associated with transmission of the PUSCH. For example, for the first set and the second set, the first resource of the first set is associated with i0, the second resource of the first set is associated with i1, the first resource of the second set is associated with i2, and the second resource of the second set is associated with i3. For another example, if the SRI indicates the first resource of the first set, that is, transmission of the PUSCH is associated with the first resource of the first set, a closed-loop index for transmission of the PUSCH is i0. For another example, if the SRI indicates the second resource of the first set and the first resource of the second set, that is, transmission of the PUSCH is associated with the second resource of the first set and the first resource of the second set, closed-loop indexes for transmission of the PUSCH are i1 and i2, and each transmission unit corresponds to one closed-loop index.

In another example, a method for associating power control parameter sequences associated with the first set and the second set that are associated with the PUSCH may be an order agreed upon in the protocol. For example, the protocol may stipulate that the first set corresponds to the first power control parameter sequence, and the second set corresponds to the second power control parameter sequence.

Optionally, the scheduling signaling includes an SRI field, and overheads of the SRI field meet one of the following: fixed overheads; being related to a maximum quantity of configurable SRS resources in the SRS resource set supported by the terminal; being related to a maximum quantity of configurable SRS resource sets supported by the terminal; being related to a quantity of SRS resource sets; being related to a quantity of SRS resources configured in each SRS resource set; being related to a quantity of layers supported by the terminal; being related to a quantity of layers of a PUSCH transmission associated with a target SRS resource set, where for example, the target SRS resource set may be the first set determined by the SRI; or being related to a maximum quantity of layers supported by a PUSCH transmission associated with the SRS resource set.

For detailed descriptions, the following describes cases 1 to 3.

Case 1

The scheduling signaling is DCI, and bit overheads of an SRI field in the DCI meet one of the following in the case of a codebook:

(1) Fixed bit correspondence.

For example, two sets are configured, both are associated with only one resource, and 2 bits are used; two sets are configured, at least one set is associated with two resources, and 3 bits or 4 bits are used; two sets are configured, at least one set is associated with four resources, and 5 bits are used.

(2) Being related to a maximum quantity of supported resources in all sets, for example, the bit overheads of the SRI field may be calculated by using the following formula:

$$\left\lceil \log_2 \left( N_{\text{SRS, max}} \right) \right\rceil,$$

where

$N_{\text{SRS, max}}$ is the maximum quantity of supported resources.

(3) Being related to a maximum quantity of configurable sets and a maximum quantity of supported resources in all sets, for example, the bit overheads of the SRI field may be calculated by using the following formula:

$$\left\lceil \log_2 \left( \sum_{i=1}^{k,\max} N_{\text{SRS, i, max}} + \prod_{i=1}^{k,\max} N_{\text{SRS, i, max}} \right) \right\rceil,$$

where

$N_{\text{SRS, i, max}}$ represents a maximum quantity of supported resources in an $i^{\text{th}}$ SRS resource set, and k, max represents the maximum quantity of configurable sets.

Alternatively, the bit overheads of the SRI field may be calculated by using the following formula:

$$\left\lceil \log_2 \left( \sum_{i=1}^{k,\max} N_{\text{SRS, i, max}} + A \binom{k,\max}{k,\max} * \prod_{i=1}^{k,\max} N_{\text{SRS, i, max}} \right) \right\rceil,$$

where $A\begin{pmatrix} k,\text{max} \\ k,\text{max} \end{pmatrix}$ represents permutations and combinations.

(4) Being related to a quantity of sets and a maximum quantity of supported resources in all sets, for example, the bit overheads of the SRI field may be calculated by using the following formula:

$$\left\lceil \log_2 \left( \sum_{i=1}^{k} N_{\text{SRS},i,\text{max}} + (k-1) * \prod_{i=1}^{k} N_{\text{SRS},i,\text{max}} \right) \right\rceil,$$

where

$N_{\text{SRS},i,\text{max}}$ represents a maximum quantity of supported resources in an $i^{\text{th}}$ SRS resource set, and $k$ represents the quantity of configured sets.

(5) Being related to a quantity of sets and a quantity of resources configured in each set, for example, the bit overheads of the SRI field may be calculated by using the following formula:

$$\left\lceil \log_2 \left( \sum_{i=1}^{k} N_{\text{SRS},i} + (k-1) * \prod_{i=1}^{k} N_{\text{SRS},i} \right) \right\rceil,$$

where

$N_{\text{SRS},i}$ represents a quantity of configured resources in an $i^{\text{th}}$ SRS resource set, and $k$ represents the quantity of configured sets.

Alternatively, the bit overheads of the SRI field may be calculated by using the following formula:

$$\left\lceil \log_2 \left( \sum_{i=1}^{k} N_{\text{SRS},i} + A\begin{pmatrix} k \\ k \end{pmatrix} * (k-1) * \prod_{i=1}^{k} N_{\text{SRS},i} \right) \right\rceil,$$

where

$N_{\text{SRS},i}$ represents a quantity of configured resources in an $i^{\text{th}}$ SRS resource set, and $k$ represents the quantity of configured sets.

(6) Being related to a quantity of sets and a quantity of resources configured in each set, for example, the bit overheads of the SRI field may be calculated by using the following formula:

$$2 * \left\lceil \log_2 k \right\rceil + \left\lceil \sum_{i=1}^{k} \log_2 N_{\text{SRS},i} \right\rceil,$$

where

$N_{\text{SRS},i}$ represents a quantity of configured resources in an $i^{\text{th}}$ SRS resource set, and $k$ represents the quantity of configured sets.

Case 2

The scheduling signaling is DCI, and bit overheads of an SRI field in the DCI meet one of the following in the case of a non-codebook:

(1) Being related to a quantity of layers supported by the terminal, a quantity of configured sets, and a quantity of resources configured in each set, for example, the bit overheads of the SRI field may be calculated by using the following formula:

$$\left\lceil \log_2 \left( \sum_{i=1}^{k} \left( \sum_{t_i=1}^{\min\{L_{\text{max},i}, N_{\text{SRS},i}\}} \binom{N_{\text{SRS},i}}{t_i} \right) + (k-1) * \prod_{i=1}^{k} \left( \sum_{t_i=1}^{\min\{L_{\text{max},i}, N_{\text{SRS},i}\}} \binom{N_{\text{SRS},i}}{t_i} \right) \right) \right\rceil,$$

where $k$ represents the quantity of configured sets, $L_{\text{max},i}$ represents a maximum quantity of layers supported by a PUSCH transmission associated with an $i^{\text{th}}$ SRS resource set (learned of through signaling or protocol stipulation), and $N_{\text{SRS},i}$ represents a quantity of configured resources in the $i^{\text{th}}$ SRS resource set.

Alternatively, the bit overheads of the SRI field may be calculated by using the following formula:

$$\left\lceil \log_2 \left( \sum_{i=1}^{k} \left( \sum_{t_i=1}^{\min\{L_{max,i}, N_{SRS,i}\}} \binom{N_{SRS,i}}{t_i} \right) + A\binom{k}{k} * (k-1) * \prod_{i=1}^{k} \left( \sum_{t_i=1}^{\min\{L_{max,i}, N_{SRS,i}\}} \binom{N_{SRS,i}}{t_i} \right) \right) \right\rceil \quad ,$$

where

$k$ represents the quantity of configured sets, $L_{max,i}$ represents a maximum quantity of layers supported by a PUSCH transmission associated with an $i$ th SRS resource set (learned of through signaling or protocol stipulation), and $N_{SRS, i}$ represents a quantity of configured resources in the $i$ th SRS resource set.

Alternatively, the bit overheads of the SRI field may be calculated by using the following formula:

$$\left\lceil \log_2 \left( \sum_{i=1}^{k} \left( \sum_{t_i=1}^{\min\{L_{max,i}, N_{SRS,i}\}} \binom{N_{SRS,i}}{t_i} \right) + (k-1) * \prod_{i=1}^{k} \left( \sum_{t_i=1}^{\min\{L_{max,i}, N_{SRS,i}\}} \binom{N_{SRS,i}}{t_i} \right) \right) \right\rceil ,$$

where

$k$ represents the quantity of configured sets, $L_{max,i}$ represents a maximum quantity of layers supported by a PUSCH transmission associated with an $i$ th SRS resource set (learned of through signaling or protocol stipulation), and $N_{SRS, i}$ represents a quantity of configured resources in the $i$ th SRS resource set.

Optionally, all sets share one $L_{max}$, and the bit overheads of the SRI field may be calculated by using the following formula:

$$\left\lceil \log_2 \left( \sum_{i=1}^{k} \left( \sum_{t_i=1}^{\min\{L_{max}, N_{SRS,i}\}} \binom{N_{SRS,i}}{t_i} \right) + (k-1) * \prod_{i=1}^{k} \left( \sum_{t_i=1}^{\min\{L_{max}, N_{SRS,i}\}} \binom{N_{SRS,i}}{t_i} \right) \right) \right\rceil .$$

(2) Related to the quantity of layers supported by the terminal, the quantity of configured set, and the quantity of resource configured in each set, and the quantity of layers of a PUSCH transmission associated with the first set (corresponding to the target SRS resource set in the foregoing) are determined by using the SRI. For example, the bit overheads of the SRI field may be calculated by using the following formula:

$$2 * \lceil \log_2 k \rceil + \left\lceil \log_2 \left( \sum_{t_1=1}^{\min\{L_{max}, N_{SRS,i}\}} \binom{N_{SRS,1}}{t_1} \right) \right\rceil + (k-1) * \left\lceil \log_2 \left( \sum_{t_2=1}^{\min\{L_1, N_{SRS,2}\}} \binom{N_{SRS,2}}{t_2} \right) \right\rceil .$$

Alternatively, the bit overheads of the SRI field may be calculated by using the following formula:

$$\lceil \log_2 k \rceil + \left\lceil \log_2 \left( \sum_{t_1=1}^{\min\{L_{max}, N_{SRS,i}\}} \binom{N_{SRS,1}}{t_1} \right) \right\rceil + (k-1) * \left\lceil \log_2 \left( \sum_{t_2=1}^{\min\{L_1, N_{SRS,2}\}} \binom{N_{SRS,2}}{t_2} \right) \right\rceil .$$

Alternatively, the bit overheads of the SRI field may be calculated by using the following formula:

$$\left\lceil \log_2 \left( \sum_{t_1=1}^{\min\{L_{max}, N_{SRS,i}\}} \binom{N_{SRS,1}}{t_1} \right) \right\rceil + (k-1) * \left\lceil \log_2 \left( \sum_{t_2=1}^{\min\{L_1, N_{SRS,2}\}} \binom{N_{SRS,2}}{t_2} \right) \right\rceil ,$$

where

$k$ represents the quantity of configured sets, $L_{max,i}$ represents a maximum quantity of layers supported by the terminal, $N_{SRS, i}$ represents a quantity of configured resources in an $i$ th SRS resource set, and $L_1$ represents the quantity of layers of the PUSCH transmission associated with the first set.

Case 3

The scheduling signaling is RRC, and bit overheads of an SRI field in a configured grant (configured grant) parameter field in the RRC signaling is related to a maximum quantity of layers supported by a PUSCH transmission associated with a set, a maximum quantity of supported set, and a maximum quantity of supported resources in the set. For example, the bit overheads of the SRI field may be calculated by using the following formula:

$$\left\lceil \log_2 \left( \sum_{i=1}^{k,\max} \left( \sum_{t_i=1}^{\min\{L_{\max}, N_{SRS,\max}\}} \binom{N_{SRS,\max}}{t_i} \right) + A\binom{k,\max}{k,\max} * (k,\max - 1) * \prod_{i=1}^{k,\max} \left( \sum_{t_i=1}^{\min\{L_{\max}, N_{SRS,\max}\}} \binom{N_{SRS,i}}{t_i} \right) \right) \right\rceil$$

, where

$k,$ max represents the maximum quantity of supported sets, $L_{\max}$ represents a maximum quantity of layers supported by the PUSCH transmission associated with the set (learned of through signaling or protocol stipulation), and $N_{SRS,\max}$ represents a maximum quantity of supported resources in the set.

Alternatively, the bit overheads of the SRI field may be calculated by using the following formula:

$$\left\lceil \log_2 \left( \sum_{i=1}^{k,\max} \left( \sum_{t_i=1}^{\min\{L_{\max}, N_{SRS,\max}\}} \binom{N_{SRS,\max}}{t_i} \right) + (k,\max - 1) * \prod_{i=1}^{k,\max} \left( \sum_{t_i=1}^{\min\{L_{\max}, N_{SRS,\max}\}} \binom{N_{SRS,i}}{t_i} \right) \right) \right\rceil .$$

It should be noted that all the foregoing optional embodiments are separately described. Actually, these optional embodiments may be further combined to form a new embodiment. To avoid repetition, details are not described one by one herein.

To describe in detail the PUSCH transmission scheduling method provided in the embodiments of this application, the following describes the method with reference to two specific embodiments.

**Embodiment 1**

In this embodiment, the DCI does not include an indication of a PUSCH transmission order.

Example 1: In this example, the scheduling signaling directly and implicitly indicates the at least one SRS resource set and/or SRS resource associated with the PUSCH.

In this example, only one resource is configured for a set whose usage (usage) includes a codebook.

In this example, the SRI field in the scheduling signaling may occupy 1 bit, and is used to indicate that transmission of the PUSCH is associated with an implicitly indicated resource or is associated with both the first SRS resource and the second SRS resource.

For example, if the SRI field is 0, it indicates being associated with an implicitly indicated resource, and a resource ID in two sets is minimum, or two set IDs are minimum.

For example, if the SRI field is 1, it indicates being associated with the first SRS resource and the second SRS resource.

Example 2: In this example, the scheduling signaling directly and implicitly indicates the at least one SRS resource set and/or SRS resource associated with the PUSCH.

In this example, two resources are configured for a set whose usage includes a codebook (excluding a full power mode).

In this example, the SRI field in the scheduling signaling may occupy 2 bit, and is used to indicate that transmission of the PUSCH is associated with an implicitly indicated set or an implicitly indicated resource or is associated with both the first SRS resource and the second SRS resource.

(1) In the case of a joint coding indication, the first set is implicitly indicated.

    00: A first resource in the implicitly indicated set.
    01: A second resource in the implicitly indicated set.
    10. A first resource in the first set and a first resource in the second set.
    11. A second resource in the first set and a second resource in the second set.

If only one resource is configured in the implicitly indicated set, the terminal does not expect that the network indicates 01, or considers that 01 also represents the first resource in the implicitly indicated set (the special processing manner corresponding to the codepoint mentioned above).

(2) In the case of at least partial independent coding indication, the first SRS resource is implicitly indicated. In this example, the SRI field in the scheduling signaling may occupy 2 bits, where 1 bit is used to indicate being associated with one or more resources, and the remaining 1 bit is used to indicate a resource.

(1) For example, 0 indicates being associated with one resource; and in the remaining 1 bit, 0 indicates being associated with a resource implicitly indicated in the first set, that is, the first resource; and 1 indicates being associated with a resource implicitly indicated in the second set, that is, the first resource.

(2) For example, 1 indicates being associated with two resources; in the remaining 1 bit, 0 indicates being associated with a first resource in the first set and a first resource in the second set, and 1 indicates being associated with a second resource in the first set and a second resource in the second set.

Example 3: In this example, the scheduling signaling directly and implicitly indicates the at least one SRS resource set and/or SRS resource associated with the PUSCH.
In this example, two resources are configured for a set whose usage includes a codebook (excluding full power), two resources are configured for the first set, and one resource is configured for the second set.
In this example, the SRI field in the scheduling signaling may occupy 2 bits.

(1) Joint coding indication: 00: a first resource in the first set; 01: a second resource in the first set; 10: a first resource in the second set; 11: a first resource in the first set and a first resource in the second set.
(2) The correspondence is updated as follows by using a MAC CE or RRC configuration: 00 indicates the first resource of the first set, 01 indicates the first resource of the second set, 10 indicates the first resource of the first set and the first resource of the second set, and 11 indicates the second resource of the first set and the first resource of the second set.

Example 4: In this example, the scheduling signaling directly indicates the at least one SRS resource set and/or SRS resource associated with the PUSCH.
In this example, one resource is configured for a set whose usage includes a codebook.
In this example, the SRI field in the scheduling signaling may occupy 2 bits, and is used to indicate that transmission of the PUSCH is associated with the first SRS resource, or the second SRS resource, or both the first SRS resource and the second SRS resource.

(1) In the case of a joint coding indication, 00 indicates the first resource of the first set; 01 indicates the first resource of the second set; and 10 or 11 indicates being associated with the first resource of the first set and the first resource of the second set.
(2) In the case of at least partial independent coding indication, 1 bit is used to indicate whether being associated with a plurality of sets. When it indicates that the plurality of sets are associated, the remaining 1 bit is ignored and not deciphered. In a case that only one set is associated, the remaining 1 bit is used to indicate the specifically associated set.
0 indicates being associated with one set, and in the remaining 1 bit, 0 indicates being associated with the first resource of the first set, and 1 indicates being associated with the first resource of the second set.
1 indicates being associated with all sets, and indicates being associated with the first resource of the first set and the first resource of the second set. In this case, the remaining 1 bit is ignored and not deciphered.

Example 5: In this example, the scheduling signaling directly indicates the at least one SRS resource set and/or SRS resource associated with the PUSCH.
In this example, two resources are configured for a set whose usage includes a codebook.
In this example, the SRI field in the scheduling signaling may occupy 3 bits, and is used to indicate that transmission of the PUSCH is associated with the first SRS resource, or the second SRS resource, or both the first SRS resource and the second SRS resource.

(1) In the case of a joint coding indication:

000: indicating the first resource of the first set.
001: indicating the second resource of the first set.
010: indicating the first resource of the second set.
011: indicating the second resource of the second set.
100: indicating the first resource of the first set and the first resource of the second set.
101: indicating the first resource of the first set and the first resource of the second set.
110: indicating the second resource of the first set and the first resource of the second set.
111: indicating the second resource of the first set and the second resource of the second set.

(2) In the case of at least partial independent coding indication, 1 bit is used to indicate whether being associated with a plurality of sets, and when the plurality of sets are associated, the two remaining bits are used for a joint coding indication; or when one set is associated, the remaining 2 bits are used for joint coding or independent coding.

For example, 0 indicates being associated with one set, and the remaining 2 bits are used for joint coding: 00 indicates the first resource of the first set; 01 indicates the second resource of the first set; 10 indicates the first resource of the second set, and 11 indicates the second resource of the second set.

For another example, 0 indicates being associated with one set; the remaining 2 bits are used for independent coding, and 1 bit is used to indicate a set: 0 indicates the first set; and 1 indicates the second set; or 1 bit is used to indicate a resource: 0 indicates a first resource; and 1 indicates a second resource.

For another example, 1 indicates being associated with two sets, and the remaining 2 bits are used for joint coding: 00 indicates the first resource of the first set and the first resource of the second set; 01 indicates the first resource of the first set and the second resource of the second set; 10 indicates the second resource of the first set and the first resource of the second set; and 11 indicates the second resource of the first set and the second resource of the second set.

In this example 5, the SRI field in the scheduling signaling may occupy 4 bits, indicating set-level and resource-level independent coding, and a default order is used.

2 bits are used to indicate the first set, the second set, or the first set and the second set, 00 indicates the first set, 01 indicates the second set, and 10 indicates the first set and the second set.

The remaining 2 bits are used for independent coding, where a 1-bit first independent coding field s used to indicate a selected resource in the first set, and a 1-bit second independent coding field is used to indicate a selected resource in the second set.

In this example 5, the SRI field in the scheduling signaling may occupy 4 bits, indicating set-level and resource-level independent coding, and an indicated set order is used.

2 bits are used to indicate the first set, the second set, or the first set and the second set. 00 indicates the first set, 01 indicates the second set, 10 indicates the first set and the second set, and 11 indicates the second set and the first set.

The remaining 2 bits are used for independent coding. If the second set and the first set are indicated, a 1-bit first independent coding field is used to indicate a selected resource in the second set, and a 1-bit second independent coding field is used to indicate a selected resource in the first set.

Example 6: In this example, the scheduling signaling directly indicates the at least one SRS resource set and/or SRS resource associated with the PUSCH.

In this example, the first set whose usage includes the codebook is configured with two resources, and the second set is configured with one resource.

In this example 5, the SRI field in the scheduling signaling may occupy 3 bits, and is indicated by using joint coding.

(1) The originally agreed correspondence is as follows:

000: indicating the first resource of the first set.
001: indicating the second resource of the first set.
010: indicating the first resource of the second set.
011: indicating the second resource of the second set.
100: indicating the first resource of the first set and the first resource of the second set.
101: indicating the first resource of the first set and the first resource of the second set.
110: indicating the second resource of the first set and the first resource of the second set.
111: indicating the second resource of the first set and the second resource of the second set.

(2) Special processing manner corresponding to the invalid codepoint:

Optionally, the terminal does not expect to indicate that a set or a resource corresponding to a codepoint is a set or a resource that is not configured, that is, an invalid codepoint should not be indicated. The terminal should not be indicated as a codepoint corresponding to 011, because only one resource is configured for the second set.

Optionally, the closest in the closest resource means being forward based on a distance of a codepoint. For example, when the terminal is indicated as a codepoint corresponding to 011 (the second resource of the second set), the terminal deciphers that the network selects 010.

Optionally, the closest in the closest resource means being backward based on a distance of a codepoint. For example, when the terminal is indicated as a codepoint corresponding to 011 (the second resource of the second set), the terminal deciphers that the network selects 100.

Optionally, the closest in the closest resource means being forward based on a distance of a resource in a set. For example, when the terminal is indicated as a codepoint corresponding to 011 (the second resource of the second set), the terminal deciphers that the network selects the first resource of the second set.

Example 7: In this example, the scheduling signaling directly indicates the at least one SRS resource set and/or SRS resource associated with the PUSCH.

In this example, for the full power mode 2, each set whose usage includes a codebook supports configuration of a maximum of four resources. The first set is configured with three resources, and the second set is configured with one resource.

In this example, overheads of the joint coding indication are related to a quantity of sets and a quantity of resources in a set:

000: indicating the first resource of the first set.
001: indicating the second resource of the first set.
010: indicating the third resource of the first set.
011: indicating the first resource of the second set.
100: indicating the first resource of the first set and the first resource of the second set.
101: indicating the second resource of the first set and the first resource of the second set.
110: indicating the third resource of the first set and the first resource of the second set.
111: not used.

**Embodiment 2**

In this embodiment, the scheduling signaling includes an indication of a PUSCH transmission order.
Example 1: In this example, the scheduling signaling directly indicates the at least one SRS resource set and/or SRS resource associated with the PUSCH.
In this example, two resources are configured for a set whose usage includes a codebook.
In this example, the SRI field in the scheduling signaling may occupy 4 bits, and is used to indicate that transmission of the PUSCH is associated with the first SRS resource or the second SRS resource, or both the first SRS resource and the second SRS resource, and needs to indicate an association order.

(1) Joint coding indication:

0000: indicating the first resource of the first set.
0001: indicating the first resource of the first set.
0010: indicating the first resource of the second set.
0011: indicating the second resource of the second set.
0100: indicating the first resource of the first set and the first resource of the second set.
0101: indicating the first resource of the first set and the first resource of the second set.
0110: indicating the second resource of the first set and the first resource of the second set.
0111: indicating the second resource of the first set and the second resource of the second set.
1000: indicating the first resource of the second set and the first resource of the first set.
1001: indicating the first resource of the second set and the second resource of the first set.
1010: indicating the second resource of the second set and the first resource of the first set.
1011: indicating the second resource of the second set and the second resource of the first set.
1100: invalid codepoint.
1101: invalid codepoint.
1110: invalid codepoint.
1111: invalid codepoint.

(2) If the SRI indicates 0100 and the PUSCH is repeatedly transmitted for four times.

The first repeat transmission is associated with the first set, the second repeat transmission is associated with the second set, the third repeat transmission is associated with the first set, and the fourth repeat transmission association is associated with the second set; or the first repeat transmission and the second repeat transmission are associated with the first set, and the third repeat transmission and the fourth repeat transmission are associated with the second set.
(3) If the SRI indicates 1000 and the PUSCH is repeatedly transmitted for four times.
The first repeat transmission is associated with the second set, the second repeat transmission is associated with the first set, the third repeat transmission is associated with the second set, and the fourth repeat transmission association is associated with the first set; or the first repeat transmission and the second repeat transmission are associated with the second set, and the third repeat transmission and the fourth repeat transmission are associated with the first set.
(4) If the SRI indicates 0100 and frequency hopping transmission is performed on the PUSCH on two different symbols of one slot, the first frequency hopping is associated with the first set and the second frequency hopping is associated with the second set.
Example 2: In this example, the scheduling signaling directly indicates the at least one SRS resource set and/or SRS resource associated with the PUSCH.

In this example, two resources are configured for a set whose usage includes a codebook.

In this example, the SRI field in the scheduling signaling may occupy 4 bits, and is used to indicate that transmission of the PUSCH is associated with the first SRS resource or the second SRS resource, or both the first SRS resource and the second SRS resource, and needs to indicate an association order.

> (1) Being indicated through at least partial joint independent coding:
> 2 bits are used to instruct to be associated with the first SRS resource set, associated with the second SRS resource set, associated with the first SRS resource set and the second SRS resource set, or associated with the second SRS resource set and the first SRS resource set.

For example, 00 indicates a first set; 01 indicates a second set; 10 indicates a first set and a second set; and 11indicates a second set and a first set.

In addition, the 2 bits may be sequentially associated with the first set and the second set, or may be associated with the first set and the second set according to a set order indicated by the foregoing 2 bits.

For example, independent coding is used to indicate a resource in a set, 1 bit is used to indicate a resource in the first set, and the other 1 bit is used to indicate a resource in the second set.

For another example, joint coding is used to indicate a resource in a set. 00 indicates a first resource and a first resource; 01 indicates a first resource and a second resource; 10 indicates a second resource and a first resource; and 11 indicates a second resource and a second resource.

For example, association with the first set and the second set is sequentially performed, and 0110 indicates a first resource in the second set.

For example, association is performed according to a set order indicated by the foregoing 2 bits, and 0110 indicates a second resource in the second set.

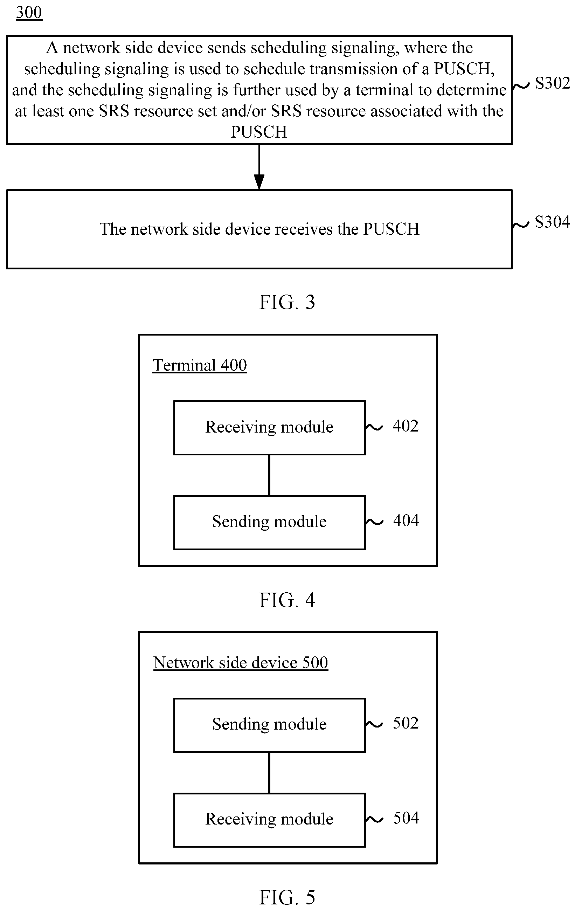

The PUSCH transmission scheduling method according to the embodiments of this application is described above in detail with reference to FIG. 2.A PUSCH transmission scheduling method according to another embodiment of this application is described in detail below with reference to FIG. 3. It can be understood that interaction between a network side device and a terminal described from the perspective of the network side device is the same as that described on the terminal side in the method shown in FIG. 2. To avoid repetition, related descriptions are appropriately omitted.

FIG. 3 is a schematic flowchart of implementing a PUSCH transmission scheduling method according to an embodiment of this application. The method may be applied to a network side device. As shown in FIG. 3, a method 300 includes the following steps.

S302: A network side device sends scheduling signaling, where the scheduling signaling is used to schedule transmission of a PUSCH, and the scheduling signaling is further used by a terminal to determine at least one SRS resource set and/or SRS resource associated with the PUSCH.

S304: The network side device receives the PUSCH.

The PUSCH is sent by the terminal according to the SRS resource set and/or SRS resource.

In this embodiment of this application, before S302, the method further includes: sending an SRS configuration, where the SRS configuration includes at least one SRS resource set, and each SRS resource set includes at least one SRS resource, where a quantity of SRS resources included in a target SRS resource set is greater than or equal to a quantity of SRS resources included in another SRS resource set in the at least one SRS resource set, and the target SRS resource set is an SRS resource set with a minimum identifier in the at least one SRS resource set.

In this embodiment of this application, at least one SRS resource set and/or SRS resource associated with a PUSCH may be determined according to scheduling signaling of the PUSCH, and each SRS resource set or SRS resource may correspond to one TRP. In this embodiment of this application, transmission of a PUSCH can be implemented in a multi-TRP scenario, so that a terminal can send the PUSCH to a TRP corresponding to an SRS resource set and/or SRS resource, thereby improving transmission efficiency of the PUSCH.

FIG. 4 is a schematic structural diagram of a terminal according to an embodiment of this application not in accordance with the appended claims and given as an example useful for the understanding of the invention. As shown in FIG. 4, a terminal 400 includes the following modules:

> a receiving module 402, configured to receive scheduling signaling, where the scheduling signaling is used to schedule transmission of a PUSCH, and the scheduling signaling is further used to determine at least one SRS resource set and/or SRS resource associated with the PUSCH; and
> a sending module 404, configured to send the PUSCH according to the SRS resource set and/or SRS resource.

In this embodiment of this application, at least one SRS resource set and/or SRS resource associated with a PUSCH may be determined according to scheduling signaling of the PUSCH, and each SRS resource set or SRS resource may correspond to one TRP. In this embodiment of this application, transmission of a PUSCH can be implemented in a multi-TRP scenario, so that a terminal can send the PUSCH to a TRP corresponding to an SRS resource set and/or SRS resource, thereby improving transmission efficiency of the PUSCH.

Optionally, in an embodiment, the receiving module 402 may be further configured to receive an SRS configuration, where the SRS configuration includes at least one SRS resource set, and each SRS resource set includes at least one SRS resource, where a quantity of SRS resources included in a target SRS resource set is greater than or equal to a quantity of SRS resources included in another SRS resource set in the at least one SRS resource set, and the target SRS resource set is an SRS resource set with a minimum identifier in the at least one SRS resource set.

Optionally, in an embodiment, the PUSCH is implicitly associated with the SRS resource set and/or SRS resource, where a number of the SRS resource set and/or SRS resource is minimum or maximum; and/or beam information of a receive beam of the scheduling signaling or beam information of a transmit beam of the PUSCH is the same as at least one of the following: beam information of a path loss reference signal RS associated with the SRS resource set and/or SRS resource, or beam information associated with the SRS resource set and/or SRS resource.

Optionally, in an embodiment, the scheduling signaling includes an indicator field, and the indicator field is used to indicate the SRS resource set and/or SRS resource.

Optionally, in an embodiment, the scheduling signaling includes at least two independent coding fields, and the at least two independent coding fields are respectively used to indicate SRS resources in at least two SRS resource sets.

Optionally, in an embodiment, the PUSCH includes at least one transmission unit, and the transmission unit includes one of the following: one nominal PUSCH repeat transmission, one actual PUSCH repeat transmission, one PUSCH transmission within a time domain unit, one PUSCH frequency hopping transmission, or one PUSCH transmission in a plurality of PUSCH repeat transmissions.

Optionally, in an embodiment, the scheduling signaling indicates one SRS resource set, and the transmission unit is associated with one SRS resource set; or the scheduling signaling indicates a plurality of SRS resource sets, the scheduling signaling is further used to indicate an order of the plurality of SRS resource sets, and the transmission unit is associated with the order of the plurality of SRS resource sets that is indicated by the scheduling signaling; or the scheduling signaling indicates a plurality of SRS resource sets, the scheduling signaling does not indicate an order of the plurality of SRS resource sets, and the transmission unit is associated with one of the following: a configuration order of the plurality of SRS resource sets, an identifier order of the plurality of SRS resource sets, an identifier order of SRS resources in the plurality of SRS resource sets, or a parity order of time domain units in which the transmission unit is located, where there is a parity binding relationship between the plurality of SRS resource sets and the time domain units in which the transmission unit is located.

Optionally, in an embodiment, a codepoint in the scheduling signaling is used to indicate the at least one SRS resource set and/or SRS resource, and a correspondence between the codepoint and the SRS resource set and/or SRS resource is: predefined; configured by a network side device; or updated and indicated by a network side device.

Optionally, in an embodiment, the terminal 400 further includes a determining module, configured to determine a processing manner corresponding to an invalid codepoint, and the processing manner corresponding to the invalid codepoint includes at least one of the following: (1) if only one SRS resource is configured in an SRS resource set corresponding to a target codepoint, an SRS resource corresponding to the target codepoint is the one SRS resource; (2) if a target codepoint is an invalid codepoint, an SRS resource set and/or SRS resource corresponding to a codepoint before or after the target codepoint is used as an SRS resource set and/or SRS resource corresponding to the invalid codepoint; (3)if a target codepoint is an invalid codepoint, an SRS resource set and/or SRS resource before or after an SRS resource set and/or SRS resource corresponding to the target codepoint is used as an SRS resource set and/or SRS resource corresponding to the invalid codepoint; (4) the terminal does not expect that an SRS resource set corresponding to a codepoint is an SRS resource set that is not configured; or (5) the terminal does not expect that an SRS resource corresponding to a codepoint is an SRS resource that is not configured.

Optionally, in an embodiment, the PUSCH is associated with a first SRS resource and a second SRS resource; and the first SRS resource and the second SRS resource are associated with different SRS resource sets.

Optionally, in an embodiment, the PUSCH is associated with a plurality of SRS resource sets; and any two SRS resource sets in the plurality of SRS resource sets meet at least one of the following: having different path loss RSs, having different spatial beam configurations, having different associated RSs, having a same time domain characteristic, being associated with a same SRS resource identifier ID, having a same quantity of SRS resource ports, having a same cycle, having different periodic slot offsets, being associated with different TRP indexes, being associated with different control resource set resource pool indexes, having different power control parameter indexes, or having different closed-loop power control index groups.

Optionally, in an embodiment, the PUSCH is associated with a first SRS resource set and a second SRS resource set; and the first SRS resource set and the second SRS resource set meet at least one of the following: (1) the first SRS resource set and the second SRS resource set are sorted in ascending order or descending order according to SRS resource set identifiers; (2) the first SRS resource set and the second SRS resource set are sorted from front to back or from back to front according to a configuration order of SRS resource sets; (3) the first SRS resource set and the second SRS resource set are configured in different sequences; or (4) the first SRS resource set and the second SRS resource set are configured with different power control parameter indexes, where the power control parameter indexes are used to distinguish the first SRS resource set from the second SRS resource set.

Optionally, in an embodiment, the PUSCH is associated with a first SRS resource and a second SRS resource; and the first SRS resource and the second SRS resource are sorted in ascending order or descending order according to SRS resource identifiers; and/or the first SRS resource and the second SRS resource are sorted from front to back or from back to front according to a configuration order of SRS resources.

Optionally, the first SRS resource set and the second SRS resource set are associated with SRS resources having a same specific usage, or the first SRS resource and the second SRS resource are associated with SRS resources having a same specific usage, where the specific usage is: predefined; configured by a network side device; or determined according to a transmission mode of the PUSCH.

Optionally, in an embodiment, the PUSCH is associated with a plurality of SRS resource sets; and any two SRS resource sets in the plurality of SRS resource sets are associated with different SRS resources.

Optionally, in an embodiment, the terminal supports a full power mode 2; and the terminal does not expect that the PUSCH is associated with a plurality of SRS resource sets having a codebook usage.

Optionally, in an embodiment, an overhead size of at least one of the following field types in the scheduling signaling is related to the SRS resource set: an SRS resource indicator field, a transmit power control TPC field, a transmitted precoding matrix indicator TPMI field, a redundancy version field, an SRS request field, or a channel state information CSI request field.

Optionally, in an embodiment, an overhead size of each TPMI field in at least one TPMI field is related to a quantity of SRS resource ports in the SRS resource set.

Optionally, in an embodiment, an overhead size of a first TPMI field in the at least one TPMI field is determined by a maximum quantity of SRS resource ports in the at least one SRS resource set.

Optionally, in an embodiment, the at least one SRS resource set includes a first SRS resource set but does not include a second SRS resource set, the at least one field type includes an indicator field or a codepoint related to the second SRS resource set, and the method further includes: ignoring, by the terminal, the indicator field or the codepoint.

Optionally, in an embodiment, an overhead size and/or a deciphering manner of at least one of the following field types in the scheduling signaling are/is related to an indication of an SRI field in the scheduling signaling: a transmit power control TPC field, a transmitted precoding matrix indicator TPMI field, a redundancy version field, an SRS request field, or a channel state information CSI request field.

Optionally, in an embodiment, the terminal 400 further includes a processing module, configured to: for the at least one field type, in a case that the at least one SRS resource set is a plurality of SRS resource sets, decipher each field type in the at least one field type; or for the at least one field type, in a case that the at least one SRS resource set is one SRS resource set, decipher only one indicator field in field types associated with an SRS resource set indicated by the SRI field.

Optionally, in an embodiment, the terminal 400 further includes a determining module, configured to determine a deciphering order of the at least one field type according to one of the following: a predefined order; or an order of the SRS resource sets indicated by the scheduling signaling.

Optionally, in an embodiment, the PUSCH is associated with a first SRS resource set and a second SRS resource set, and the receiving module 402 may be configured to receive configuration information, where the configuration information is used to configure two power control parameter sequences, and the two power control parameter sequences are used to indicate power control parameters of PUSCH transmission units associated with the first SRS resource set and the second SRS resource set.

Optionally, in an embodiment, the two power control parameter sequences include different closed-loop power control indexes; and/or the first SRS resource set and the second SRS resource set are separately associated with one of the power control parameter sequences.

Optionally, in an embodiment, the terminal 400 further includes a determining module, configured to determine, according to an SRI field of the scheduling signaling, a power control parameter associated with transmission of the PUSCH.

Optionally, in an embodiment, the scheduling signaling includes an SRI field, and overheads of the SRI field meet one of the following: (1) fixed overheads; (2) being related to a maximum quantity of configurable SRS resources in the SRS resource set supported by the terminal; (3) being related to a maximum quantity of configurable SRS resource sets supported by the terminal; (4) being related to a quantity of SRS resource sets; (5) being related to a quantity of SRS resources configured in each SRS resource set; (6) being related to a quantity of layers supported by the terminal; (7) being related to a quantity of layers of a PUSCH transmission associated with a target SRS resource set; or (8) being related to a maximum quantity of layers supported by a PUSCH transmission associated with the SRS resource set.

The terminal 400 according to the embodiments of this application may correspond to the procedures of the method 200 in the embodiments of this application, and the units/modules in the terminal 400 and the foregoing operations and/or functions are respectively for implementing the corresponding procedures of the method 200, and a same or equivalent technical effect can be achieved. For brevity, details are not described herein again.

The terminal in this embodiment of this application may be an apparatus, or may be a component, an integrated circuit, or a chip in a terminal. The apparatus may be a mobile terminal, or a non-mobile terminal. For example, the mobile device may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The terminal in this embodiment of this application may be an apparatus with an operating system. The operating system may be an Android (Android) operating system, an iOS operating system, or another possible operating system. This is not specifically limited in the embodiments of this application.

The terminal provided in this embodiment of this application can implement the processes implemented in the method embodiment in FIG. 2, and achieve a same technical effect. To avoid repetition, details are not described herein again.

FIG. 5 is a schematic structural diagram of a network side device according to an embodiment of this application not in accordance with the appended claims and given as an example useful for the understanding of the invention. As shown in FIG. 5, a network side device 500 includes the following modules:

a sending module 502, configured to send scheduling signaling, where the scheduling signaling is used to schedule transmission of a PUSCH, and the scheduling signaling is further used by a terminal to determine at least one SRS resource set and/or SRS resource associated with the PUSCH; and

a receiving module 504, configured to receive the PUSCH, where the PUSCH is sent by the terminal according to the SRS resource set and/or SRS resource.

Optionally, the sending module 502 in this embodiment of this application may be further configured to send an SRS configuration, where the SRS configuration includes at least one SRS resource set, and each SRS resource set includes at least one SRS resource, where a quantity of SRS resources included in a target SRS resource set is greater than or equal to a quantity of SRS resources included in another SRS resource set in the at least one SRS resource set, and the target SRS resource set is an SRS resource set with a minimum identifier in the at least one SRS resource set.

In this embodiment of this application, at least one SRS resource set and/or SRS resource associated with a PUSCH may be determined according to scheduling signaling of the PUSCH, and each SRS resource set or SRS resource may correspond to one TRP. In this embodiment of this application, transmission of a PUSCH can be implemented in a multi-TRP scenario, so that a terminal can send the PUSCH to a TRP corresponding to an SRS resource set and/or SRS resource, thereby improving transmission efficiency of the PUSCH.

The network side device 500 according to the embodiments of this application may correspond to the procedures of the method 300 in the embodiments of this application, and the units/modules in the network side device 500 and the foregoing operations and/or functions are respectively for implementing the corresponding procedures of the method 300, and a same or equivalent technical effect can be achieved. For brevity, details are not described herein again.

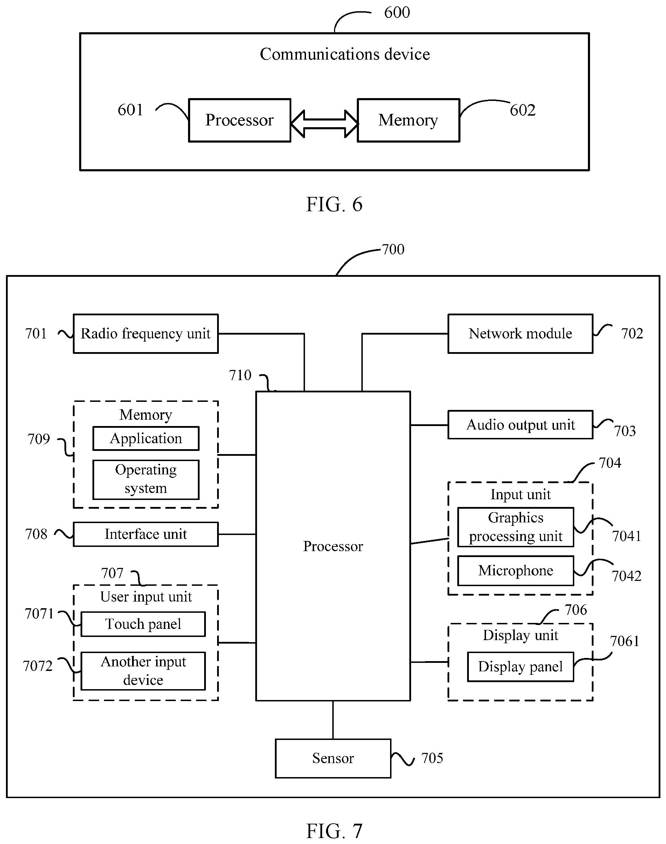

Optionally, as shown in FIG. 6, an embodiment of this application further provides a communications device 600, including a processor 601, a memory 602, and a program or an instruction that is stored in the memory 602 and that can be run on the processor 601. For example, when the communications device 600 is a terminal, the program or the instruction is executed by the processor 601 to implement the processes of the foregoing PUSCH transmission scheduling method embodiment, and a same technical effect can be achieved. When the communications device 600 is a network side device, the program or the instruction is executed by the processor 601 to implement the processes of the foregoing PUSCH transmission scheduling method embodiment, and a same technical effect can be achieved. To avoid repetition, details are not described herein again.

FIG. 7 is a schematic structural diagram of hardware of a terminal according to an embodiment of this application.

A terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) that supplies power to each component. The power supply may be logically connected to the processor 710 by using a power supply management system, to implement functions such as charging and discharging management, and power consumption management by using the power supply management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (such as a camera) in a video capture mode or an image capture mode. The display unit 706 may include a display panel 7061. Optionally, the display panel 7061 may be configured in a form such as a liquid crystal display or an organic light-emitting diode. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and sends uplink data to the network side device. Usually, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a program or instruction storage area and a data storage area. The program or instruction storage area may store an operating system, and an application or an instruction required by at least one function (for example, a sound playing function or an image playing function). In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 710 may include one or more processing units. Optionally, an application processor and a modem processor may be integrated into the processor 710. The application processor mainly processes an operating system, a user interface, an application, an instruction, or the like. The modem processor mainly processes wireless communications, for example, a baseband processor. It can be understood that, alternatively, the modem processor may not be integrated into the processor 710.

The radio frequency unit 701 is configured to: receive scheduling signaling, where the scheduling signaling is used to schedule transmission of a PUSCH, and the scheduling signaling is further used to determine at least one SRS resource set and/or SRS resource associated with the PUSCH; and send the PUSCH according to the SRS resource set and/or SRS resource.

In this embodiment of this application, at least one SRS resource set and/or SRS resource associated with a PUSCH may be determined according to scheduling signaling of the PUSCH, and each SRS resource set or SRS resource may correspond to one TRP. In this embodiment of this application, transmission of a PUSCH can be implemented in a multi-TRP scenario, so that a terminal can send the PUSCH to a TRP corresponding to an SRS resource set and/or SRS resource, thereby improving transmission efficiency of the PUSCH.

The terminal 700 provided in this embodiment of this application can implement the processes of the forgoing PUSCH transmission scheduling method embodiment, and achieve a same technical effect. To avoid repetition, details are not described herein again.

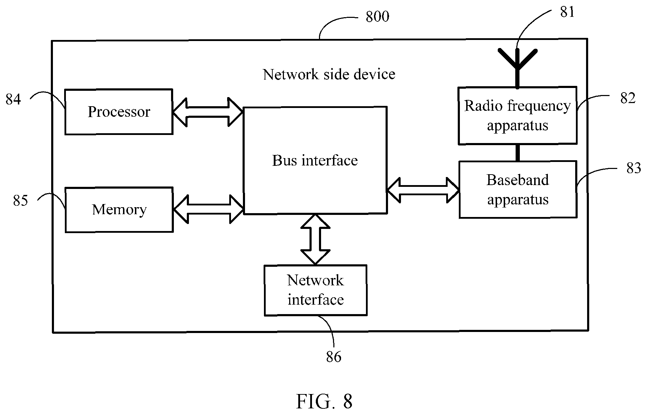

Specifically, an embodiment of this application further provides a network side device. As shown in FIG. 8, a network side device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82. The radio frequency apparatus 82 processes the received information and then sends the information by using the antenna 81.

The frequency band processing apparatus may be located in the baseband apparatus 83. The method performed by the network side device in the foregoing embodiment may be implemented in the baseband apparatus 83. The baseband apparatus 83 includes a processor 84 and a memory 85.

The baseband apparatus 83 may include, for example, at least one baseband board, where a plurality of chips are disposed on the baseband board. As shown in FIG. 8, one chip is, for example, the processor 84, which is connected to the memory 85, so as to invoke a program in the memory 85 to perform operations of the network side device shown in the foregoing method embodiment.

The baseband apparatus 83 may further include a network interface 86, configured to exchange information with the radio frequency apparatus 82. For example, the interface is a common public radio interface (common public radio interface, CPRI for short).

Specifically, the network side device in this embodiment of the present invention further includes an instruction or a program that is stored in the memory 85 and that can be run on the processor 84. The processor 84 invokes the instruction or the program in the memory 85 to perform the method performed by the modules shown in FIG. 5, and a same technical effect is achieved. To avoid repetition, details are not described herein again.

An embodiment of this application further provides a readable storage medium. The readable storage medium may be volatile or non-volatile. The readable storage medium stores a program or an instruction, and the program or the instruction is executed by a processor to implement the processes of the foregoing PUSCH transmission scheduling method embodiment, and a same technical effect can be achieved. To avoid repetition, details are not described herein again.

The processor may be a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing PUSCH transmission scheduling method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer software product. The computer software product is stored in a non-volatile storage medium, and the computer software product is executed by at least one processor to implement the processes of the foregoing PUSCH transmission scheduling method embodiment, and a same technical effect can be achieved. To avoid repetition, details are not described herein again.

An embodiment of this application further provides a communications device, configured to perform the processes of the foregoing PUSCH transmission scheduling method embodiment, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network side device, or the like) to perform the methods in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

**Claims**

1. A physical uplink shared channel, PUSCH, transmission scheduling method, wherein the method comprises:

   receiving (S202), by a terminal, scheduling signaling, wherein the scheduling signaling is used to schedule transmission of a PUSCH, and the scheduling signaling is further used to determine at least one SRS resource set and/or SRS resource associated with the PUSCH; and
   sending (S204), by the terminal, the PUSCH according to the SRS resource set and/or SRS resource;
   wherein the PUSCH comprises at least one transmission unit;
   **characterized in that** the scheduling signaling indicates a plurality of SRS resource sets, the scheduling signaling is further used to indicate an order of the plurality of SRS resource sets, and the transmission unit is associated with the order of the plurality of SRS resource sets that is indicated by the scheduling signaling.

2. The method according to claim 1, wherein the PUSCH is implicitly associated with the SRS resource set and/or SRS resource, wherein

a number of the SRS resource set and/or SRS resource is minimum or maximum; and/or
beam information of a receive beam of the scheduling signaling or beam information of a transmit beam of the PUSCH is the same as at least one of the following: beam information of a path loss reference signal RS associated with the SRS resource set and/or SRS resource, or beam information associated with the SRS resource set and/or SRS resource.

3. The method according to claim 1, wherein the scheduling signaling comprises an indicator field, and the indicator field is used to indicate the SRS resource set and/or SRS resource; or,
wherein the scheduling signaling comprises at least two independent coding fields, and the at least two independent coding fields are respectively used to indicate SRS resources in at least two SRS resource sets.

4. The method according to any one of claims 1 to 3, wherein the transmission unit comprises one of the following: one nominal PUSCH repeat transmission, one actual PUSCH repeat transmission, one PUSCH transmission within a time domain unit, one PUSCH frequency hopping transmission, or one PUSCH transmission in a plurality of PUSCH repeat transmissions.

5. The method according to claim 1, wherein a codepoint in the scheduling signaling is used to indicate the at least one SRS resource set and/or SRS resource, and a correspondence between the codepoint and the SRS resource set and/or SRS resource is:

predefined;
configured by a network side device; or
updated and indicated by a network side device;
wherein the method further comprises: determining a processing manner corresponding to an invalid codepoint, and the processing manner corresponding to the invalid codepoint comprises at least one of the following:

if only one SRS resource is configured in an SRS resource set corresponding to a target codepoint, an SRS resource corresponding to the target codepoint is the one SRS resource;
if a target codepoint is an invalid codepoint, an SRS resource set and/or SRS resource corresponding to a codepoint before or after the target codepoint is used as an SRS resource set and/or SRS resource corresponding to the invalid codepoint;
if a target codepoint is an invalid codepoint, an SRS resource set and/or SRS resource before or after an SRS resource set and/or SRS resource corresponding to the target codepoint is used as an SRS resource set and/or SRS resource corresponding to the invalid codepoint;
the terminal does not expect that an SRS resource set corresponding to a codepoint is an SRS resource set that is not configured; or
the terminal does not expect that an SRS resource corresponding to a codepoint is an SRS resource that is not configured.

6. The method according to claim 1, wherein the PUSCH is associated with a plurality of SRS resource sets; and any two SRS resource sets in the plurality of SRS resource sets meet at least one of the following:

having different path loss RSs, having different spatial beam configurations, having different associated RSs, having a same time domain characteristic, being associated with a same SRS resource identifier ID, having a same quantity of SRS resource ports, having a same cycle, having different periodic slot offsets, being associated with different TRP indexes, being associated with different control resource set resource pool indexes, having different power control parameter indexes, or having different closed-loop power control index groups; or,
wherein the PUSCH is associated with a first SRS resource set and a second SRS resource set; and the first SRS resource set and the second SRS resource set meet at least one of the following:

the first SRS resource set and the second SRS resource set are sorted in ascending order or descending order according to SRS resource set identifiers;
the first SRS resource set and the second SRS resource set are sorted from front to back or from back to front according to a configuration order of SRS resource sets;
the first SRS resource set and the second SRS resource set are configured in different sequences; or

the first SRS resource set and the second SRS resource set are configured with different power control parameter indexes, wherein the power control parameter indexes are used to distinguish the first SRS resource set from the second SRS resource set.

7. The method according to claim 1, wherein the PUSCH is associated with a first SRS resource and a second SRS resource; and

the first SRS resource and the second SRS resource are sorted in ascending order or descending order according to SRS resource identifiers; and/or
the first SRS resource and the second SRS resource are sorted from front to back or from back to front according to a configuration order of SRS resources.

8. The method according to claim 1, wherein an overhead size of at least one of the following field types in the scheduling signaling is related to the SRS resource set:

an SRS resource indicator field, a transmit power control TPC field, a transmitted precoding matrix indicator TPMI field, a redundancy version field, an SRS request field, or a channel state information CSI request field;
wherein an overhead size of each TPMI field in at least one TPMI field is related to a quantity of SRS resource ports in the SRS resource set.

9. The method according to claim 8, wherein an overhead size of a first TPMI field in the at least one TPMI field is determined by a maximum quantity of SRS resource ports in the at least one SRS resource set.

10. The method according to claim 8, wherein the at least one SRS resource set comprises a first SRS resource set but does not comprise a second SRS resource set, the at least one field type comprises an indicator field or a codepoint related to the second SRS resource set, and the method further comprises:
ignoring, by the terminal, the indicator field or the codepoint.

11. The method according to claim 1, wherein the scheduling signaling comprises an SRI field, and overheads of the SRI field meet one of the following:

fixed overheads;
being related to a maximum quantity of configurable SRS resources in the SRS resource set supported by the terminal;
being related to a maximum quantity of configurable SRS resource sets supported by the terminal;
being related to a quantity of SRS resource sets;
being related to a quantity of SRS resources configured in each SRS resource set;
being related to a quantity of layers supported by the terminal;
being related to a quantity of layers of a PUSCH transmission associated with a target SRS resource set; or
being related to a maximum quantity of layers supported by a PUSCH transmission associated with the SRS resource set.

12. The method according to claim 1, before the receiving, by a terminal, scheduling signaling, further comprising:
receiving, by the terminal, an SRS configuration, wherein the SRS configuration comprises at least one SRS resource set, and each SRS resource set comprises at least one SRS resource, wherein a quantity of SRS resources comprised in a target SRS resource set is greater than or equal to a quantity of SRS resources comprised in another SRS resource set in the at least one SRS resource set, and the target SRS resource set is an SRS resource set with a minimum identifier in the at least one SRS resource set.

13. A physical uplink shared channel, PUSCH, transmission scheduling method, wherein the method comprises:

sending (S302), by a network side device, scheduling signaling, wherein the scheduling signaling is used to schedule transmission of a PUSCH, and the scheduling signaling is further used to determine at least one SRS resource set and/or SRS resource associated with the PUSCH; and
receiving (S304), by the network side device, the PUSCH, wherein the PUSCH is sent by the terminal according to the SRS resource set and/or SRS resource;
wherein the PUSCH comprises at least one transmission unit;
**characterized in that** the scheduling signaling indicates a plurality of SRS resource sets, the scheduling signaling is further used to indicate an order of the plurality of SRS resource sets, and the transmission unit is associated with the order of the plurality of SRS resource sets that is indicated by the scheduling signaling.

14. A terminal, comprising a processor, a memory, and a program or an instruction that is stored in the memory and that can be run on the processor, **characterized in that** when the program or the instruction is executed by the processor, the PUSCH transmission scheduling method according to any one of claims 1 to 12 is implemented.

15. A network side device, comprising a processor, a memory, and a program or an instruction that is stored in the memory and that can be run on the processor, **characterized in that** when the program or the instruction is executed by the processor, the PUSCH transmission scheduling method according to claim 13 is implemented.

**Patentansprüche**

1. Übertragungsplanungsverfahren eines gemeinsam genutzten physikalischen Uplink-Kanals, PUSCH, das Verfahren umfassend:

Empfangen (S202), durch ein Endgerät, von Planungssignalen, wobei die Planungssignale verwendet werden, um eine Übertragung eines PUSCH zu planen, und die Planungssignale ferner verwendet werden, um mindestens einen SRS-Ressourcensatz und/oder eine SRS-Ressource, die mit dem PUSCH assoziiert sind, zu bestimmen; und
Senden (S204) des PUSCH durch das Endgerät gemäß dem SRS-Ressourcensatz und/oder der SRS-Ressource;
wobei der PUSCH mindestens eine Übertragungseinheit umfasst;
**dadurch gekennzeichnet, dass** die Planungssignale eine Vielzahl von SRS-Ressourcensätzen angeben, die Planungssignale ferner verwendet werden, um eine Reihenfolge der Vielzahl von SRS-Ressourcensätzen anzugeben, und die Übertragungseinheit mit der Reihenfolge der Vielzahl von SRS-Ressourcensätzen assoziiert ist, die durch die Planungssignale angegeben werden.

2. Verfahren nach Anspruch 1, wobei der PUSCH implizit mit dem SRS-Ressourcensatz und/oder der SRS-Ressource assoziiert ist, wobei

eine Anzahl des SRS-Ressourcensatzes und/oder der SRS-Ressource minimal oder maximal ist; und/oder Strahlinformationen eines Empfangsstrahls der Planungssignale oder Strahlinformationen eines Sendestrahls des PUSCH gleich sind wie mindestens eines von Folgenden: Strahlinformationen eines Pfadverlust-Referenzsignals RS, die mit dem SRS-Ressourcensatz und/oder der SRS-Ressource assoziiert ist, oder Strahlinformationen, die mit dem SRS-Ressourcensatz und/oder der SRS-Ressource assoziiert sind.

3. Verfahren nach Anspruch 1, wobei die Planungssignale ein Indikatorfeld umfassen und das Indikatorfeld verwendet wird, um den SRS-Ressourcensatz und/oder die SRS-Ressource anzugeben; oder,
wobei die Planungssignale mindestens zwei unabhängige Kodierungsfelder umfassen und die mindestens zwei unabhängigen Kodierungsfelder jeweils verwendet werden, um SRS-Ressourcen in mindestens zwei SRS-Ressourcensätzen anzugeben.

4. Verfahren nach einem der Ansprüche 1 bis 3, wobei die Übertragungseinheit eines der Folgenden umfasst:
eine nominelle PUSCH-Wiederholungsübertragung, eine tatsächliche PUSCH-Wiederholungsübertragung, eine PUSCH-Übertragung innerhalb einer Zeitbereichseinheit, eine PUSCH-Frequenzsprungübertragung oder eine PUSCH-Übertragung in einer Vielzahl von PUSCH-Wiederholungsübertragungen.

5. Verfahren nach Anspruch 1, wobei ein Codepunkt in den Planungssignalen verwendet wird, um den mindestens einen SRS-Ressourcensatz und/oder die mindestens eine SRS-Ressource anzugeben, und eine Übereinstimmung zwischen dem Codepunkt und dem SRS-Ressourcensatz und/oder der SRS-Ressource wie folgt ist:

vordefiniert;
konfiguriert von einer netzseitigen Vorrichtung; oder
aktualisiert und angegeben durch eine netzseitige Vorrichtung;
wobei das Verfahren ferner Folgendes umfasst: Bestimmen einer Verarbeitungsweise, die einem ungültigen Codepunkt entspricht, und wobei die Verarbeitungsweise, die dem ungültigen Codepunkt entspricht, mindestens eines der Folgenden umfasst:

wenn nur eine SRS-Ressource in einem SRS-Ressourcensatz konfiguriert ist, der einem Zielcodepunkt entspricht, ist eine SRS-Ressource, die dem Zielcodepunkt entspricht, die eine SRS-Ressource;

wenn ein Zielcodepunkt ein ungültiger Codepunkt ist, wird ein SRS-Ressourcensatz und/oder eine SRS-Ressource, die einem Codepunkt vor oder nach dem Zielcodepunkt entspricht, als ein SRS-Ressourcensatz und/oder eine SRS-Ressource verwendet, die dem ungültigen Codepunkt entspricht;

wenn ein Zielcodepunkt ein ungültiger Codepunkt ist, wird ein SRS-Ressourcensatz und/oder eine SRS-Ressource vor oder nach einem SRS-Ressourcensatz und/oder einer SRS-Ressource, die dem Zielcodepunkt entspricht, als ein SRS-Ressourcensatz und/oder eine SRS-Ressource verwendet, die dem ungültigen Codepunkt entspricht;

das Endgerät erwartet nicht, dass ein SRS-Ressourcensatz, der einem Codepunkt entspricht, ein SRS-Ressourcensatz ist, der nicht konfiguriert ist; oder

das Endgerät erwartet nicht, dass eine SRS-Ressource, die einem Codepunkt entspricht, eine nicht konfigurierte SRS-Ressource ist.

6. Verfahren nach Anspruch 1, wobei der PUSCH mit einer Vielzahl von SRS-Ressourcensätzen assoziiert ist und zwei beliebige SRS-Ressourcensätze in der Vielzahl von SRS-Ressourcensätzen mindestens eines der Folgenden erfüllen:

sie weisen verschiedene Pfadverlust-RS auf, sie weisen verschiedene räumliche Strahlkonfigurationen auf, sie weisen verschiedene assoziierte RS auf, sie weisen eine gleiche Zeitbereichscharakteristik auf, sie weisen eine gleiche SRS-Ressourcenkennung-ID auf, sie weisen eine gleiche Anzahl von SRS-Ressourcen-Anschlüssen auf, sie weisen einen gleichen Zyklus auf, sie weisen verschiedene periodische Schlitz-Offsets auf, sie sind mit verschiedenen TRP-Indizes assoziiert, sie sind mit verschiedenen Steuerressourcensatz-Ressourcen-Pool-Indizes assoziiert, sie weisen verschiedene Leistungssteuerungsparameter-Indizes auf oder sie weisen verschiedene Leistungssteuerung-Indexgruppen für den geschlossenen Regelkreis auf; oder,

wobei der PUSCH mit einem ersten SRS-Ressourcensatz und einem zweiten SRS-Ressourcensatz assoziiert ist; und der erste SRS-Ressourcensatz und der zweite SRS-Ressourcensatz mindestens eines der Folgenden erfüllen:

der erste SRS-Ressourcensatz und der zweite SRS-Ressourcensatz sind in aufsteigender oder absteigender Reihenfolge nach den SRS-Ressourcensatzkennungen sortiert;

der erste SRS-Ressourcensatz und der zweite SRS-Ressourcensatz sind gemäß einer Konfigurationsreihenfolge von SRS-Ressourcensätzen von vorne nach hinten oder von hinten nach vorne sortiert;

der erste SRS-Ressourcensatz und der zweite SRS-Ressourcensatz sind in verschiedener Reihenfolge konfiguriert; oder

der erste SRS-Ressourcensatz und der zweite SRS-Ressourcensatz sind mit verschiedenen Leistungssteuerungsparameter-Indizes konfiguriert, wobei die Leistungssteuerungsparameter-Indizes verwendet werden, um den ersten SRS-Ressourcensatz von dem zweiten SRS-Ressourcensatz zu unterscheiden.

7. Verfahren nach Anspruch 1, wobei der PUSCH mit einer ersten SRS-Ressource und einer zweiten SRS-Ressource assoziiert ist; und

die erste SRS-Ressource und die zweite SRS-Ressource in aufsteigender oder absteigender Reihenfolge nach SRS-Ressourcenbezeichnungen sortiert sind; und/oder

die erste SRS-Ressource und die zweite SRS-Ressource gemäß einer Konfigurationsreihenfolge von SRS-Ressourcen von vorne nach hinten oder von hinten nach vorne sortiert sind.

8. Verfahren nach Anspruch 1, wobei eine Overhead-Größe von mindestens einem der folgenden Feldtypen in den Planungssignalen mit dem SRS-Ressourcensatz assoziiert ist:

ein SRS-Ressourcenindikatorfeld, ein Feld für Sendeleistungssteuerung, TPC, ein Feld für übertragenen Vorcodierungsmatrixindikator, TPMI, ein Redundanzversionsfeld, ein SRS-Anforderungsfeld oder ein CSI-Anforderungsfeld für Kanalzustandsinformationen;

wobei eine Overhead-Größe von jedem TPMI-Feld in mindestens einem TPMI-Feld mit einer Menge von SRS-Ressourcenanschlüssen in dem SRS-Ressourcensatz in Beziehung steht.

9. Verfahren nach Anspruch 8, wobei eine Overhead-Größe eines ersten TPMI-Felds in dem mindestens einen TPMI-Feld durch eine maximale Anzahl von SRS-Ressourcenanschlüssen in dem mindestens einen SRS-Ressourcensatz bestimmt wird.

10. Verfahren nach Anspruch 8, wobei der mindestens eine SRS-Ressourcensatz einen ersten SRS-Ressourcensatz umfasst, aber keinen zweiten SRS-Ressourcensatz umfasst, der mindestens einen Feldtyp ein Indikatorfeld oder einen Codepunkt umfasst, der sich auf den zweiten SRS-Ressourcensatz bezieht, und das Verfahren ferner Folgendes umfasst:
Ignorieren, durch das Endgerät, des Indikatorfelds oder des Codepunkts.

11. Verfahren nach Anspruch 1, wobei die Planungssignale ein SRI-Feld umfassen und die Overheads des SRI-Felds eines der Folgenden erfüllen:

fixe Overheads;
sie beziehen sich auf eine maximale Anzahl konfigurierbarer SRS-Ressourcen in dem von dem Endgerät unterstützten SRS-Ressourcensatz;
sie beziehen sich auf eine maximale Anzahl von konfigurierbaren SRS-Ressourcensätzen, die von dem Terminal unterstützt werden;
sie beziehen sich auf eine Menge von SRS-Ressourcensätzen;
sie beziehen sich auf eine Menge von SRS-Ressourcen, die in jedem SRS-Ressourcensatz konfiguriert sind;
sie beziehen sich auf die Anzahl der von dem Endgerät unterstützten Schichten;
sie beziehen sich auf eine Anzahl von Schichten einer PUSCH-Übertragung, die mit einem Ziel-SRS-Ressourcensatz assoziiert ist; oder
sie beziehen sich auf eine maximale Anzahl von Schichten, die von einer mit dem SRS-Ressourcensatz assoziierten PUSCH-Übertragung unterstützt werden.

12. Verfahren nach Anspruch 1, das vor dem Empfang, durch ein Endgerät, von Planungssignalen ferner Folgendes umfasst:
Empfangen, durch das Endgerät, einer SRS-Konfiguration, wobei die SRS-Konfiguration mindestens einen SRS-Ressourcensatz umfasst und jeder SRS-Ressourcensatz mindestens eine SRS-Ressource umfasst, wobei eine Menge von SRS-Ressourcen, die in einem Ziel-SRS-Ressourcensatz enthalten sind, größer als oder gleich eine Menge von SRS-Ressourcen ist, die in einem anderen SRS-Ressourcensatz in dem mindestens einen SRS-Ressourcensatz enthalten sind, und der Ziel-SRS-Ressourcensatz ein SRS-Ressourcensatz mit einem minimalen Identifikator in dem mindestens einen SRS-Ressourcensatz ist.

13. Übertragungsplanungsverfahren eines gemeinsam genutzten physikalischen Uplink-Kanals, PUSCH, das Verfahren umfassend:

Senden (S302), durch eine netzseitige Vorrichtung, von Planungssignalen, wobei die Planungssignale verwendet werden, um eine Übertragung eines PUSCH zu planen, und die Planungssignale ferner verwendet werden, um mindestens einen SRS-Ressourcensatz und/oder eine SRS-Ressource, die mit dem PUSCH assoziiert sind, zu bestimmen; und
Empfangen (S304), durch die netzseitige Vorrichtung, des PUSCH, wobei der PUSCH gemäß dem SRS-Ressourcensatz und/oder der SRS-Ressource durch das Endgerät gesendet wird;
wobei der PUSCH mindestens eine Übertragungseinheit umfasst;
**dadurch gekennzeichnet, dass** die Planungssignale eine Vielzahl von SRS-Ressourcensätzen angeben, die Planungssignale ferner verwendet werden, um eine Reihenfolge der Vielzahl von SRS-Ressourcensätzen anzugeben, und die Übertragungseinheit mit der Reihenfolge der Vielzahl von SRS-Ressourcensätzen assoziiert ist, die durch die Planungssignale angegeben werden.

14. Endgerät, umfassend einen Prozessor, einen Speicher und ein Programm oder eine Anweisung, das/die in dem Speicher gespeichert ist und auf dem Prozessor ausgeführt werden kann, **dadurch gekennzeichnet, dass**, wenn das Programm oder die Anweisung von dem Prozessor ausgeführt wird, das PUSCH-Übertragungsplanungsverfahren nach einem der Ansprüche 1 bis 12 implementiert wird.

15. Netzseitige Vorrichtung, umfassend einen Prozessor, einen Speicher und ein Programm oder eine Anweisung, das/die in dem Speicher gespeichert ist und auf dem Prozessor ausgeführt werden kann, **dadurch gekennzeichnet, dass**, wenn das Programm oder die Anweisung von dem Prozessor ausgeführt wird, das PUSCH-Übertragungsplanungsverfahren nach Anspruch 13 implementiert wird.

**Revendications**

1. Procédé de programmation de transmission d'un canal partagé de liaison montante physique (PUSCH), dans lequel le procédé comprend :

   la réception (S202), par un terminal, d'une signalisation de programmation, dans lequel la signalisation de programmation est utilisée pour programmer la transmission d'un PUSCH, et la signalisation de programmation est en outre utilisée pour déterminer au moins un ensemble de ressources SRS et/ou une ressource SRS associés au PUSCH ; et
   l'envoi (S204), par le terminal, du PUSCH en fonction de l'ensemble de ressources SRS et/ou de la ressource SRS ;
   dans lequel le PUSCH comprend au moins une unité de transmission ;
   **caractérisé en ce que** la signalisation de programmation indique une pluralité d'ensembles de ressources SRS, la signalisation de programmation est également utilisée pour indiquer un ordre de la pluralité d'ensembles de ressources SRS, et l'unité de transmission est associée à l'ordre de la pluralité d'ensembles de ressources SRS qui est indiqué par la signalisation de programmation.

2. Procédé selon la revendication 1, dans lequel le PUSCH est implicitement associé à l'ensemble de ressources SRS et/ou à la ressource SRS, dans lequel

   un nombre de l'ensemble de ressources SRS et/ou de la ressource SRS est minimal ou maximal ; et/ou
   les informations de faisceau d'un faisceau de réception de la signalisation de programmation ou les informations de faisceau d'un faisceau de transmission du PUSCH sont identiques à au moins l'un des éléments suivants : des informations de faisceau d'un signal de référence de perte de trajet RS associées à l'ensemble de ressources SRS et/ou à la ressource SRS, ou des informations de faisceau associées à l'ensemble de ressources SRS et/ou à la ressource SRS.

3. Procédé selon la revendication 1, dans lequel la signalisation de programmation comprend un champ indicateur, et le champ indicateur est utilisé pour indiquer l'ensemble de ressources SRS et/ou la ressource SRS ; ou, dans lequel la signalisation de programmation comprend au moins deux champs de codage indépendants, et les au moins deux champs de codage indépendants sont respectivement utilisés pour indiquer les ressources SRS dans au moins deux ensembles de ressources SRS.

4. Procédé selon l'une quelconque des revendications 1 à 3, dans lequel l'unité de transmission comprend l'un des éléments suivants :
   une transmission répétée PUSCH nominale, une transmission répétée PUSCH réelle, une transmission PUSCH dans une unité de domaine temporel, une transmission PUSCH à saut de fréquence, ou une transmission PUSCH dans une pluralité de transmissions répétées PUSCH.

5. Procédé selon la revendication 1, dans lequel un point de code dans la signalisation de programmation est utilisé pour indiquer l'au moins un ensemble de ressources SRS et/ou une ressource SRS, et une correspondance entre le point de code et l'ensemble de ressources SRS et/ou la ressource SRS est :

   prédéfinie ;
   configurée par un dispositif côté réseau ; ou
   mise à jour et indiquée par un dispositif côté réseau ;
   dans lequel le procédé comprend en outre : la détermination d'un mode de traitement correspondant à un point de code non valide, et le mode de traitement correspondant au point de code non valide comprend au moins l'un des éléments suivants :

   si une seule ressource SRS est configurée dans un ensemble de ressources SRS correspondant à un point de code cible, une ressource SRS correspondant au point de code cible est la seule ressource SRS ;
   si un point de code cible est un point de code non valide, un ensemble de ressources SRS et/ou une ressource SRS correspondant à un point de code antérieur ou postérieur au point de code cible sont utilisés comme un ensemble de ressources SRS et/ou une ressource SRS correspondant au point de code non valide ;

si un point de code cible est un point de code non valide, un ensemble de ressources SRS et/ou une ressource SRS antérieur(e) ou postérieur(e) à un ensemble de ressources SRS et/ou à une ressource SRS correspondant au point de code cible sont utilisés comme un ensemble de ressources SRS et/ou une ressource SRS correspondant au point de code non valide ;

le terminal ne prévoit pas qu'un ensemble de ressources SRS correspondant à un point de code soit un ensemble de ressources SRS non configuré ; ou

le terminal ne prévoit pas qu'une ressource SRS correspondant à un point de code soit une ressource SRS non configurée.

6. Procédé selon la revendication 1, dans lequel le PUSCH est associé à une pluralité d'ensembles de ressources SRS ; et deux ensembles de ressources SRS quelconques dans la pluralité d'ensembles de ressources SRS répondent à au moins l'un des critères suivants :

ayant des RS de perte de trajet différents, ayant des configurations spatiales de faisceau différentes, ayant des RS associés différents, ayant une même caractéristique de domaine temporel, étant associés à un même identifiant ID de ressource SRS, ayant une même quantité de ports de ressource SRS, ayant un même cycle, ayant des décalages de créneaux périodiques différents, étant associés à des index TRP différents, étant associés à des index de pool de ressources d'ensemble de ressources de contrôle différents, ayant des index de paramètres de contrôle de puissance différents, ou ayant des groupes d'index de contrôle de puissance en boucle fermée différents ; ou,

dans lequel le PUSCH est associé à un premier ensemble de ressources SRS et à un second ensemble de ressources SRS ; et le premier ensemble de ressources SRS et le second ensemble de ressources SRS répondent à au moins l'un des critères suivants :

le premier ensemble de ressources SRS et le second ensemble de ressources SRS sont triés par ordre croissant ou décroissant en fonction des identifiants d'ensemble de ressources SRS;

le premier ensemble de ressources SRS et le second ensemble de ressources SRS sont triés de l'avant vers l'arrière ou de l'arrière vers l'avant selon un ordre de configuration des ensembles de ressources SRS ;

le premier ensemble de ressources SRS et le second ensemble de ressources SRS sont configurés dans des séquences différentes ; ou

le premier ensemble de ressources SRS et le second ensemble de ressources SRS sont configurés avec des index de paramètres de contrôle de puissance différents, dans lequel les index de paramètres de contrôle de puissance sont utilisés pour distinguer le premier ensemble de ressources SRS du second ensemble de ressources SRS.

7. Procédé selon la revendication 1, dans lequel le PUSCH est associé à une première ressource SRS et à une seconde ressource SRS ; et

la première ressource SRS et la seconde ressource SRS sont triées par ordre croissant ou décroissant en fonction des identifiants de ressource SRS ; et/ou

la première ressource SRS et la seconde ressource SRS sont triées de l'avant vers l'arrière ou de l'arrière vers l'avant selon un ordre de configuration des ressources SRS.

8. Procédé selon la revendication 1, dans lequel une taille de surcharge d'au moins un des types de champs suivants dans la signalisation de programmation est liée à l'ensemble de ressources SRS :

un champ d'indicateur de ressource SRS, un champ de contrôle de puissance d'émission TPC, un champ d'indicateur de matrice de précodage transmise TPMI, un champ de version de redondance, un champ de demande SRS ou un champ de demande d'information sur l'état du canal CSI ;

dans lequel une taille de surcharge de chaque champ TPMI dans au moins un champ TPMI est liée à la quantité de ports de ressources SRS dans l'ensemble de ressources SRS.

9. Procédé selon la revendication 8, dans lequel la taille de surcharge d'un premier champ TPMI dans l'au moins un champ TPMI est déterminée par une quantité maximale de ports de ressources SRS dans l'au moins un ensemble de ressources SRS.

10. Procédé selon la revendication 8, dans lequel l'au moins un ensemble de ressources SRS comprend un premier ensemble de ressources SRS, mais ne comprend pas un second ensemble de ressources SRS, l'au moins un type de champ comprend un champ indicateur ou un point de code lié au second ensemble de ressources SRS, et le procédé comprend en outre :

l'ignorance, par le terminal, du champ indicateur ou du point de code.

11. Procédé selon la revendication 1, dans lequel la signalisation de programmation comprend un champ SRI, et les surcharges du champ SRI répondent à l'une des conditions suivantes :

les surcharges sont fixes ;
sont liées à une quantité maximale de ressources SRS configurables dans l'ensemble de ressources SRS pris en charge par le terminal ;
sont liées à une quantité maximale d'ensembles de ressources SRS configurables pris en charge par le terminal ;
sont liées à une quantité d'ensembles de ressources SRS ;
sont liées à une quantité de ressources SRS configurées dans chaque ensemble de ressources SRS ;
sont liées à une quantité de couches prises en charge par le terminal ;
sont liées à une quantité de couches d'une transmission PUSCH associée à un ensemble de ressources SRS cible ; ou
se rapportent à une quantité maximale de couches prises en charge par une transmission PUSCH associée à l'ensemble de ressources SRS.

12. Procédé selon la revendication 1, avant la réception, par un terminal, d'un signal de programmation, comprenant en outre :
la réception, par le terminal, d'une configuration SRS, dans lequel la configuration SRS comprend au moins un ensemble de ressources SRS, et chaque ensemble de ressources SRS comprend au moins une ressource SRS, dans lequel une quantité de ressources SRS comprise dans un ensemble de ressources SRS cible est supérieure ou égale à une quantité de ressources SRS comprise dans un autre ensemble de ressources SRS dans l'au moins un ensemble de ressources SRS, et l'ensemble de ressources SRS cible est un ensemble de ressources SRS avec un identifiant minimal dans l'au moins un ensemble de ressources SRS.

13. Procédé de programmation de transmission d'un canal partagé de liaison montante physique (PUSCH), dans lequel le procédé comprend :

l'envoi (S302), par un dispositif côté réseau, d'une signalisation de programmation, dans lequel la signalisation de programmation est utilisée pour programmer la transmission d'un PUSCH, et la signalisation de programmation est en outre utilisée pour déterminer au moins un ensemble de ressources SRS et/ou une ressource SRS associés au PUSCH ; et
la réception (S304), par le dispositif côté réseau, du PUSCH, dans lequel le PUSCH est envoyé par le terminal en fonction de l'ensemble de ressources SRS et/ou de la ressource SRS;
dans lequel le PUSCH comprend au moins une unité de transmission ;
**caractérisé en ce que** la signalisation de programmation indique une pluralité d'ensembles de ressources SRS, la signalisation de programmation est en outre utilisée pour indiquer un ordre de la pluralité d'ensembles de ressources SRS, et l'unité de transmission est associée à l'ordre de la pluralité d'ensembles de ressources SRS qui est indiqué par la signalisation de programmation.

14. Terminal comprenant un processeur, une mémoire et un programme ou une instruction stocké(e) dans la mémoire et pouvant être exécuté(e) sur le processeur, **caractérisé en ce que** lorsque le programme ou l'instruction est exécuté (e) par le processeur, le procédé de programmation de la transmission PUSCH selon l'une quelconque des revendications 1 à 12 est mis en œuvre.

15. Dispositif côté réseau, comprenant un processeur, une mémoire et un programme ou une instruction stocké(e) dans la mémoire et pouvant être exécuté(e) sur le processeur, **caractérisé en ce que** lorsque le programme ou l'instruction est exécuté(e) par le processeur, le procédé de programmation de la transmission PUSCH selon la revendication 13 est mis en œuvre.

Network side device

11

11

Terminal

Terminal

FIG. 1

200

A terminal receives scheduling signaling, where the scheduling signaling is used to schedule transmission of a PUSCH, and the scheduling signaling is further used to determine at least one SRS resource set and/or SRS resource associated with the PUSCH

S202

The terminal sends the PUSCH according to the SRS resource set and/or SRS resource

S204

FIG. 2

300

| |
| --- |
| A network side device sends scheduling signaling, where the scheduling signaling is used to schedule transmission of a PUSCH, and the scheduling signaling is further used by a terminal to determine at least one SRS resource set and/or SRS resource associated with the PUSCH |

~ S302

| |
| --- |
| The network side device receives the PUSCH |

~ S304

FIG. 3

Terminal 400

| |
| --- |
| Receiving module |

~ 402

| |
| --- |
| Sending module |

~ 404

FIG. 4

Network side device 500

| |
| --- |
| Sending module |

~ 502

| |
| --- |
| Receiving module |

~ 504

FIG. 5

## FIG. 6

## FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2019111619 A1